# EUROPEAN PATENT SPECIFICATION

(11) **EP 3 457 103 B1**
(45) Date of publication and mention of the grant of the patent: **04.08.2021**
(21) Application number: 18194679.9
(22) Date of filing: 14.09.2018
(51) Int. Cl.: G01L 1/22, G01L 5/16, G01L 5/162, G01L 5/22

(54) **FORCE SENSOR DEVICE**
KRAFTSENSORVORRICHTUNG
DISPOSITIF DE CAPTEUR DE FORCE

(30) Priority: 19.09.2017 JP 2017179195; 04.04.2018 JP 2018072404
(43) Date of publication of application: 20.03.2019
(73) Proprietor: Minebea Mitsumi Inc., Kitasaku-gun, Nagano 389-0293 (JP)
(72) Inventor: TAKI, Tomohito, Tama-Shi, Tokyo 206-8567 (JP); SUGANUMATA, Masayuki, Tama-Shi, Tokyo 206-8567 (JP)
(74) Representative: Regimbeau

(56) References cited:
- EP-A2- 1 327 870
- EP-A2- 3 404 390
- WO-A1-2017/025428
- US-A1- 2007 251 328
- US-B2- 8 250 934

## Description

### BACKGROUND OF THE INVENTION

### 1. Field of the Invention

The present invention relates to a force sensor device.

### 2. Description of the Related Art

Conventionally, a force sensor device has been known that has multiple strain gauges affixed on a strain generator formed of metal, to detect forces in multiple axes by converting a strain into an electric signal when an external force is applied. Force sensors of this type are disclosed in WO 2017/025428 A1, US 2007/251328 A1, EP 1327870 A2 and US 8250934 B2. A co-pending EP application filed by the Applicant, which was published as EP 3404390 A2 after the effective date of the present application, also discloses a force senor of this type. Such a force sensor device outputs, for example, an electric signal corresponding to a strain when an external force is applied to an active component, such as an IC or the like separately prepared separately from the force sensor device, so that the IC performs predetermined signal processing (see, for example, Japanese Patent No. 4011345).

However, when providing an active component such as an IC on the outside of a force sensor device, there has been a problem that the total device size becomes greater.

The present invention has been made in view of the above, and has an object to downsize a force sensor device including an active component.

### SUMMARY OF THE INVENTION

The above object is achieved by a sensor chip device as defined in appended claim 1 and the corresponding dependent claims.

According to a disclosed technology, it is possible to downsize a force sensor device including an active component.

### BRIEF DESCRIPTION OF THE DRAWINGS

FIG. 1 includes perspective views exemplifying a force sensor device according to a first embodiment;
FIG. 2 includes diagrams exemplifying a force sensor device according to the first embodiment;
FIG. 3 is a perspective view exemplifying a sensor chip and a strain generator of a force sensor device according to the first embodiment;
FIG. 4 is a circuit block diagram describing active components 32-35;
FIG. 5 includes diagrams of a sensor chip 110 viewed from the upper side in the Z-axis direction;
FIG. 6 includes diagrams of the sensor chip 110 viewed from the lower side in the Z-axis direction;
FIG. 7 is a diagram illustrating reference codes that represent forces and moments acting along and around the respective axes;
FIG. 8 is a diagram exemplifying a placement of piezo-resistive elements of the sensor chip 110;
FIG. 9 is a diagram exemplifying a placement of electrodes and wirings in the sensor chip 110;
FIG. 10 is an enlarged plan view exemplifying a temperature sensor of the sensor chip 110;
FIG. 11 includes first diagrams exemplifying a strain generator 20;
FIG. 12 includes second diagrams exemplifying the strain generator 20;
FIG. 13 includes third diagrams exemplifying the strain generator 20;
FIG. 14 includes first diagrams exemplifying a manufacturing process of a force sensor device 1;
FIG. 15 includes second diagrams exemplifying a manufacturing process of the force sensor device 1;
FIG. 16 includes third diagrams exemplifying a manufacturing process of the force sensor device 1;
FIG. 17 includes fourth diagrams exemplifying a manufacturing process of the force sensor device 1;
FIG. 18 includes fifth diagrams exemplifying a manufacturing process of the force sensor device 1;
FIG. 19 includes sixth diagrams exemplifying a manufacturing process of the force sensor device 1;
FIG. 20 is a diagram illustrating an example of wiring routes of the power source and the GND of a board 30;
FIG. 21 includes diagrams exemplifying a force sensor device according to a modified example 1 in the first embodiment;
FIG. 22 is a perspective view exemplifying a force sensor device according to a modified example 2 in the first embodiment;
FIG. 23 includes diagrams exemplifying a force sensor device according to the modified example 2 in the first embodiment;
FIG. 24 is a perspective view exemplifying a force sensor device according to a modified example 3 in the first embodiment;
FIG. 25 includes diagrams illustrating a junction between a strain generator and a force receiving plate in a force sensor device 1C;
FIG. 26 includes first diagrams exemplifying a force sensor device according to a modified example 4 in the first embodiment;
FIG. 27 includes second diagrams exemplifying a force sensor device according to the modified example 4 in the first embodiment;
FIG. 28 is a diagram illustrating a stress generated when a force is applied to a force receiving plate 70;
FIG. 29 includes diagrams exemplifying a force sensor device according to a modified example 5 in the first embodiment;
FIG. 30 includes diagrams exemplifying a board of a force sensor device according to the modified example 5 in the first embodiment;
FIG. 31 is a diagram illustrating an example of a position of a board connected to the GND in a strain generator;
FIG. 32 includes diagrams illustrating another example of a position of a board connected to the GND in a strain generator; and
FIG. 33 includes diagrams exemplifying a strain generator according to a modified example 6 in the first embodiment.

### DETAILED DESCRIPTION OF THE PREFERRED EMBODIMENTS

In the following, embodiments will be described with reference to the drawings. Throughout the drawings, the same elements may be assigned the same reference codes, and duplicated description may be omitted.

### <First embodiment>

### (Schematic configuration of force sensor device 1)

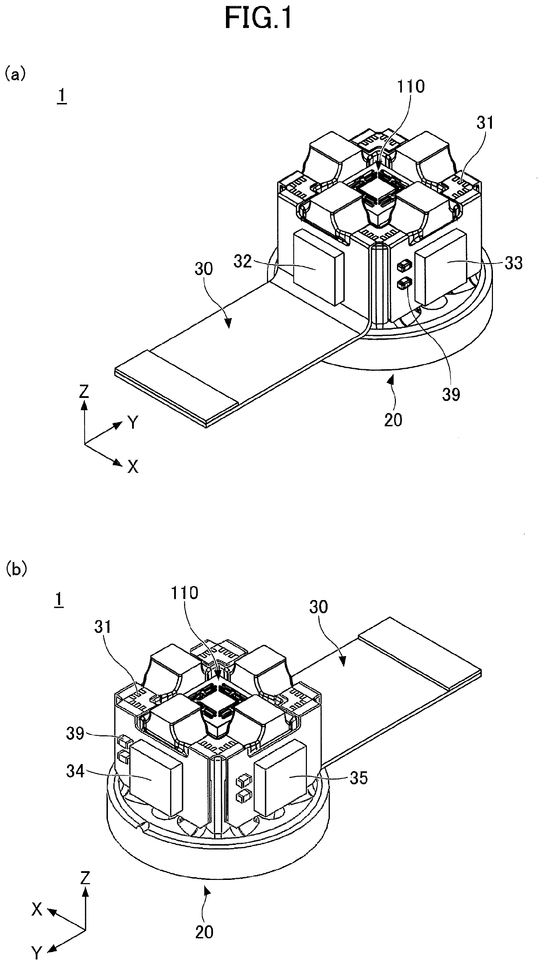

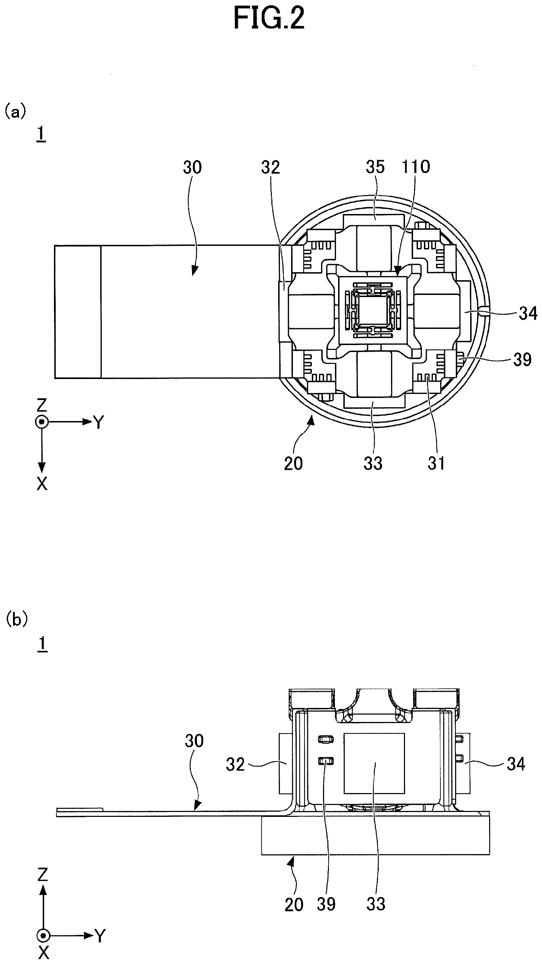

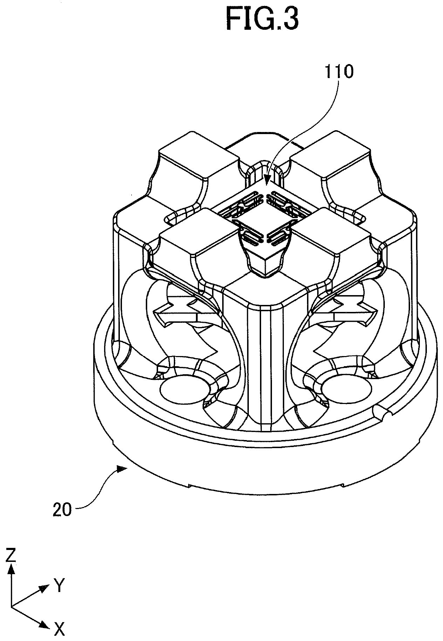

FIG. 1 includes perspective views exemplifying a force sensor device according to a first embodiment. FIG. 2 includes diagrams exemplifying the force sensor device according to the first embodiment; FIG. 2(a) is a plan view and FIG. 2(b) is a side view. FIG. 3 is a perspective view exemplifying a sensor chip and a strain generator of the force sensor device according to the first embodiment. Referring to FIG. 1 to FIG. 3, the force sensor device 1 includes a sensor chip 110, a strain generator 20, and a board 30. The force sensor device 1 is a multi-axial force sensor device to be installed, for example, in an arm, a finger, and the like of a robot used for machine tools and the like.

The sensor chip 110 has a function to detect displacement in predetermined axial directions of the maximum of six axes. The strain generator 20 has a function to transfer an applied force to the sensor chip 110. In the following embodiments, although a case where the sensor chip 110 detects six axes will be described as an example, it is not limited as such; for example, the sensor chip 110 can be used in the case where three axes are to be detected.

The strain generator 20 has the sensor chip 110 adhered on the upper surface side in a way not to project out of the strain generator 20. The strain generator 20 has also one end of the board 30, which is provided to input and output signals with the sensor chip 110, adhered on the upper surface and the side surfaces. The sensor chip 110 and electrodes 31 of the board 30 are electrically connected by bonding wires or the like (not illustrated).

The active components 32-35 are placed on the side surfaces of the strain generator 20. Specifically, the active components 32-35 are mounted on one surface of the board 30 (e.g., a flexible printed circuit board), and the other surface of the board 30 is fixed to the side surfaces of the strain generator 20. The active components 32-35 are electrically connected with the corresponding electrodes 31 through a wiring pattern (not illustrated) formed on the board 30.

In more detail, in the board 30, the active component 32 is mounted on an area placed on a first side surface of the strain generator 20. In the board 30, the active component 33 and passive components 39 are mounted on an area placed on a second side surface of the strain generator 20. In the board 30, the active component 34 and passive components 39 are mounted on an area placed on a third side surface of the strain generator 20. In the board 30, the active component 35 and passive components 39 are mounted on an area placed on a fourth side surface of the strain generator 20. Note that if necessary, in addition to the active component 32, a passive component 39 may be mounted on an area placed on the first side surface of the strain generator 20.

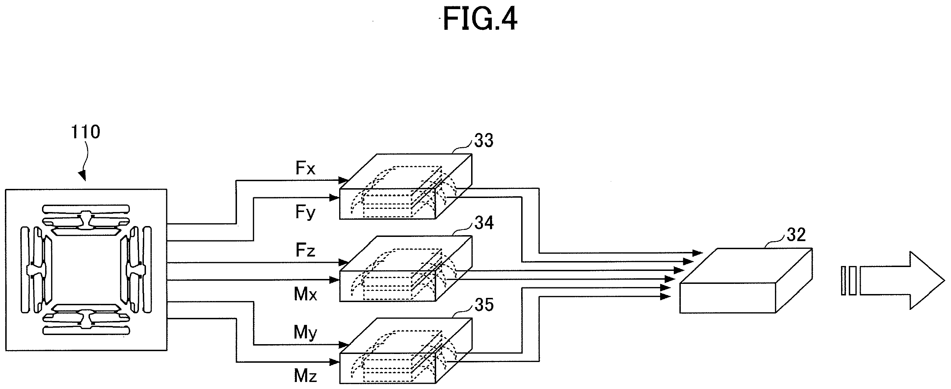

FIG. 4 is a circuit block diagram describing the active components 32-35. As illustrated in FIG. 4, the active component 33 is electrically connected with the sensor chip 110, to receive as input, for example, an analog electric signal from a bridge circuit that detects a force Fx in the X-axis direction output from the sensor chip 110, and an analog electric signal from a bridge circuit that detects a force Fy in the Y-axis direction output from the sensor chip 110. The active component 33 is, for example, a control IC having a function to convert an analog electric signal output by the sensor chip 110 into a digital electric signal, to internally correct the temperature and the amplitude, and to output it as a digital electric signal.

The active component 34 is electrically connected with the sensor chip 110, to receive as input, for example, an analog electric signal from a bridge circuit that detects a force Fz in the Z-axis direction output from the sensor chip 110, and an analog electric signal from a bridge circuit that detects a moment Mx that causes rotation around an axis being the X-axis output from the sensor chip 110. The active component 34 is, for example, a control IC having a function to convert an analog electric signal output by the sensor chip 110 into a digital electric signal, to internally correct the temperature and the amplitude, and to output it as a digital electric signal.

The active component 35 is electrically connected with the sensor chip 110, to receive as input, for example, an analog electric signal from a bridge circuit that detects a moment My that causes rotation around an axis being the Y-axis output from the sensor chip 110, and an analog electric signal from a bridge circuit that detects a moment Mz that causes rotation around an axis being the Z-axis output from the sensor chip 110. The active component 35 is, for example, a control IC having a function to convert an analog electric signal output by the sensor chip 110 into a digital electric signal, to internally correct the temperature and the amplitude, and to output it as a digital electric signal.

The active component 32 is a calculation IC that is electrically connected with the active components 33-35, and has a function, for example, to perform a predetermined calculation on digital electric signals output by the active components 33, 34, and 35, to convert the forces Fx, Fy and Fz, and the moments Mx, My, and Mz into a unit of the forces or moments, and to output these to the outside. For example, the active component 32 can output the forces Fx, Fy, and Fz in the unit of [N], and the moments Mx, My, and Mz in the unit of [N·cm]. The active component 32 may be an FPGA (Field Programmable Gate Array), an ASIC (Application Specific Integrated Circuit), or the like. The passive component 39 is a resistor, a capacitor, or the like to be connected to the active components 33-35.

Note that in the case of performing digitization, digitization and correction calculation, or the like for all of the six axes output from the sensor chip 110, one control IC is required for each axis, normally. In this case, if attempting to provide the mounting space of the control ICs in the force sensor device 1, it is necessary to secure a placement space for at least six components, and the size of the force sensor device 1 needs to be enlarged. Although a method that realizes digitization of the output may be considered by connecting a control board module having control ICs mounted on the outside without enlarging the size of the force sensor device 1, it is not desirable because the occupancy area and the volume will increase in total. Alternatively, one may consider integrating control ICs that have a sufficient performance and functions for six axes into a single chip. In this case, although a smaller size may be realized compared with the above case of separate six control ICs, the size of the force sensor device 1 still needs to be enlarged if the integrated chip is provided in the force sensor device 1.

Thereupon, in the present embodiment, two chips are stacked and mounted in a single package to form a two-in-one package, and three control ICs each formed in the two-in-one package are used. Since a one-chip package and a two-in-one package do not differ greatly in the size, the control ICs can be placed on the side surfaces of the strain generator 20. This enables to mount the control ICs for six axes in the force sensor device 1 without enlarging the size of the force sensor device 1. In other words, this enables to downsize the force sensor device 1 including the active components. This also enables to digitize output signals of the sensor chip 110 without enlarging the size of the force sensor device 1.

Note that the number of ICs to implement the functions of the active components 32-35 can be determined discretionarily. Also, the number of ICs to be mounted in the force sensor device 1 can be determined discretionarily. For example, a form is possible in which only one control IC is mounted in the force sensor device 1.

The board 30 bends outward at the lower side of the first side surface of the strain generator 20, and the other end of the board 30 is pulled out to the outside. On the other end of the board 30, input/output terminals (not illustrated) are arranged, through which electrical input and output can be executed with an external circuit (a controller or the like) connected with the force sensor device 1.

Placing active components (control IC and the like) on the side surfaces of the strain generator 20 in this way enables to realize the force sensor device 1 that can output a digital signal that has been adjusted and/or corrected by the active components, while keeping the total size of the force sensor device 1 to the minimum.

Also, using the control ICs in the two-in-one packages enables to digitize the output of the force sensor device 1 without enlargement.

Also, since a digital electric signal is output from the board 30, it is possible to improve the noise tolerance compared with the case where an analog electric signal is output.

Note that in the present embodiment, for the sake of convenience, in the force sensor device 1, the side on which the sensor chip 110 is provided is referred to as the upper side or the one side, and the opposite side is referred to as the lower side or the other side. Also, with respect to relevant parts, the side on which the sensor chip 110 is provided is referred to as the upper side or the one side, and the opposite side is referred to as the lower side or the other side. However, it is possible to use the force sensor device 1 in an upside-down state, or to be placed in any angle. Also, assume that a "plan view" refers to viewing an object in the normal-line direction (Z-axis direction) from the upper side of the sensor chip 110, and a "plane shape" refers to a shape of an object viewed in the normal-line direction (Z-axis direction) from the upper side of the sensor chip 110.

### (Sensor chip 110)

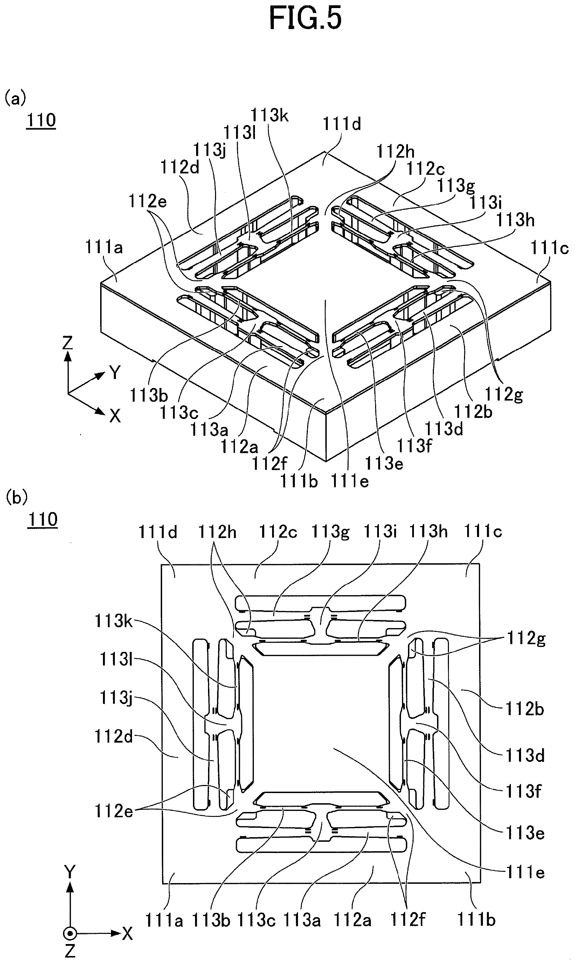

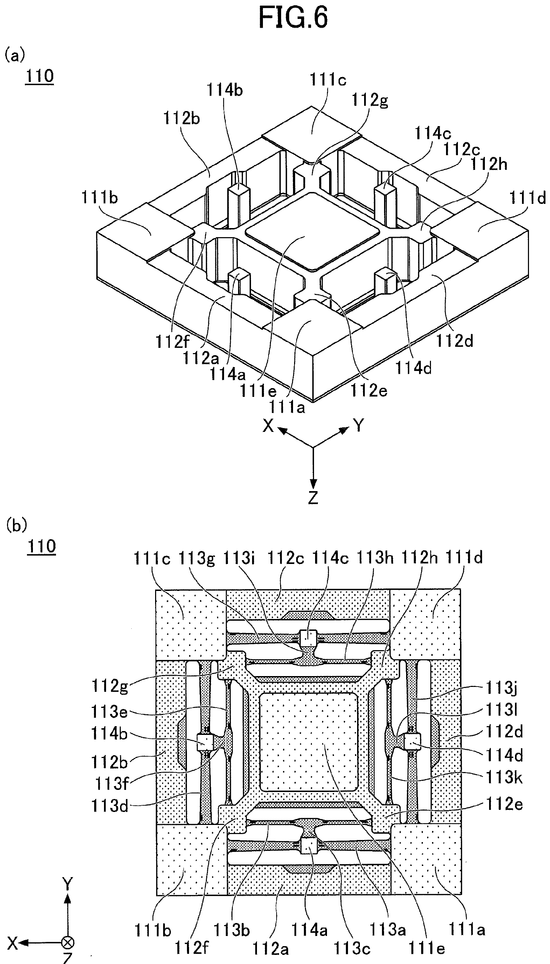

FIG. 5 includes diagrams of the sensor chip 110 viewed from the upper side in the Z-axis direction; FIG. 5(a) is a perspective view and FIG. 5(b) is a plan view. FIG. 6 includes diagrams of the sensor chip 110 viewed from the lower side in the Z-axis direction; FIG. 6 (a) is a perspective view and FIG. 6 (b) is a bottom plan view. In FIG. 6(b), for the sake of convenience, surfaces having an equivalent height are illustrated with a dot pattern of the same density. Note that the direction parallel to one side of the upper surface of the sensor chip 110 is taken as the X-axis direction; a perpendicular direction is taken as the Y-axis direction; and the thickness direction of the sensor chip 110 (the normal-line direction of the upper surface of the sensor chip 110) is taken as the Z-axis direction. The X-axis direction, the Y-axis direction, and the Z-axis direction are orthogonal to each other.

The sensor chip 110 illustrated in FIG. 5 and FIG. 6 is a MEMS (Micro Electro Mechanical Systems) sensor chip that can detect a maximum of six axes by the single chip, and is formed of a semiconductor substrate such as an SOI (Silicon On Insulator) substrate. The plane shape of the sensor chip 110 may be, for example, a square with an approximately 3000-µm side.

The sensor chip 110 has five pillar-shaped supporting portions 111a-111e. The plane shape of the supporting portions 111a-111e may be, for example, a square with an approximately 500-µm side. The supporting portions 111a-111d as first supporting portions are placed at the four corners of the sensor chip 110. The supporting portion 111e as a second supporting portion is placed at the center of the supporting portions 111a-111d.

The supporting portions 111a-111e may be formed from an active layer, a BOX layer, and a supporting layer of an SOI substrate, and each portion may have the thickness of, for example, approximately 500 µm.

Between the supporting portion 111a and the supporting portion 111b, a reinforcement beam 112a is provided for reinforcing the structure; both ends of the reinforcement beam 112a are fixed to the supporting portion 111a and the supporting portion 111b, respectively (to connect adjoining supporting portions). Between the supporting portion 111b and the supporting portion 111c, a reinforcement beam 112b is provided for reinforcing the structure; both ends of the reinforcement beam 112b are fixed to the supporting portion 111b and the supporting portion 111c, respectively (to connect adjoining supporting portions).

Between the supporting portion 111c and the supporting portion 111d, a reinforcement beam 112c is provided for reinforcing the structure; both ends of the reinforcement beam 112c are fixed to the supporting portion 111c and the supporting portion 111d, respectively (to connect adjoining supporting portions). Between the supporting portion 111d and the supporting portion 111a, a reinforcement beam 112d is provided for reinforcing the structure; both ends of the reinforcement beam 112d are fixed to the supporting portion 111d and the supporting portion 111a, respectively (to connect adjoining supporting portions).

In other words, the four reinforcement beams 112a, 112b, 112c, and 112d as the first reinforcement beams are formed in a frame shape, and corner portions as intersections of adjoining reinforcement beams correspond to the supporting portions 111b, 111c, 111d, and 111a.

The inner corner portion of the supporting portion 111a and a facing corner portion of the supporting portion 111e are connected by a reinforcement beam 112e for reinforcing the structure. The inner corner portion of the supporting portion 111b and a facing corner portion of the supporting portion 111e are connected by a reinforcement beam 112f for reinforcing the structure.

The inner corner portion of the supporting portion 111c and a facing corner portion of the supporting portion 111e are connected by a reinforcement beam 112g for reinforcing the structure. The inner corner portion of the supporting portion 111d and a facing corner portion of the supporting portion 111e are connected by a reinforcement beam 112h for reinforcing the structure. The reinforcement beams 112e-112h as the second reinforcement beams are placed aslant to the X-axis direction (Y-axis direction). In other words, the reinforcement beams 112e-112h are placed non-parallel with the reinforcement beams 112a, 112b, 112c, and 112d.

The reinforcement beams 112a-112h may be formed of, for example, an active layer, a BOX layer, and a supporting layer of an SOI substrate. The thickness of the reinforcement beams 112a-112h (the width in the short direction) may be set to, for example, approximately 140 µm. The upper surfaces of the reinforcement beams 112a-112h are virtually flush with the upper surfaces of the supporting portions 111a-111e.

In contrast, the lower surfaces of the reinforcement beams 112a-112h are depressed toward the upper surfaces by approximately several 10s of µm with respect to the lower surfaces of the supporting portions 111a-111e and the lower surfaces of force application points 114a-114d. The reason is to prevent the lower surfaces of the reinforcement beams 112a-112h from contacting a facing surface of the strain generator 20 when the sensor chip 110 adheres to the strain generator 20.

In this way, aside from detection beams for detecting a strain, by placing the reinforcement beams formed to be thicker and to have a higher rigidity than the detection beams, it is possible to improve the rigidity of the sensor chip 110 as a whole. This makes the parts other than the detection beams less likely to deform in response to an input, and hence, enables to obtain satisfactory sensor characteristics.

On the inside of the reinforcement beam 112a between the supporting portion 111a and the supporting portion 111b, a detection beam 113a is provided for detecting a strain, in parallel with and separated by a predetermined interval from the reinforcement beam 112a, and having both ends fixed to the supporting portion 111a and the supporting portion 111b, respectively (to connect adjoining supporting portions).

Between the detection beam 113a and the supporting portion 111e, a detection beam 113b is provided separated by predetermined intervals from the detection beam 113a and the supporting portion 111e, and in parallel with the detection beam 113a. The detection beam 113b connects an end of the reinforcement beam 112e on the side of the supporting portion 111e, with an end of the reinforcement beam 112f on the side of the supporting portion 111e.

An approximately central part in the longitudinal direction of the detection beam 113a and an approximately central part in the longitudinal direction of the detection beam 113b, which face each other, are connected by a detection beam 113c placed to be orthogonal to the detection beam 113a and the detection beam 113b.

On the inside of the reinforcement beam 112b between the supporting portion 111b and the supporting portion 111c, the detection beam 113d is provided for detecting a strain, in parallel with and separated by a predetermined interval from the reinforcement beam 112b, and having both ends fixed to the supporting portion 111b and the supporting portion 111c respectively (to connect adjoining supporting portions).

Between the detection beam 113d and the supporting portion 111e, a detection beam 113e is provided separated by predetermined intervals from the detection beam 113d and the supporting portion 111e, and in parallel with the detection beam 113d. The detection beam 113e connects an end of the reinforcement beam 112f on the side of the supporting portion 111e, with an end of the reinforcement beam 112g on the side of the supporting portion 111e.

An approximately central part in the longitudinal direction of the detection beam 113d and an approximately central part in the longitudinal direction of the detection beam 113e, which face each other, are connected by a detection beam 113f placed to be orthogonal to the detection beam 113d and the detection beam 113e.

On the inside of the reinforcement beam 112c between the supporting portion 111c and the supporting portion 111d, the detection beam 113g is provided for detecting a strain, in parallel with and separated by a predetermined interval from the reinforcement beam 112c, and having both ends fixed to the supporting portion 111c and the supporting portion 111d, respectively (to connect adjoining supporting portions).

Between the detection beam 113g and the supporting portion 111e, a detection beam 113h is provided separated by predetermined intervals from the detection beam 113g and the supporting portion 111e, and in parallel with the detection beam 113g. The detection beam 113h connects an end of the reinforcement beam 112g on the side of the supporting portion 111e, with an end of the reinforcement beam 112h on the side of the supporting portion 111e.

An approximately central part in the longitudinal direction of the detection beam 113g and an approximately central part in the longitudinal direction of the detection beam 113h, which face each other, are connected by a detection beam 113i placed to be orthogonal to the detection beam 113g and the detection beam 113h.

On the inside of the reinforcement beam 112d between the supporting portion 111d and the supporting portion 111a, a detection beam 113j is provided for detecting a strain, in parallel with and separated by a predetermined interval from the reinforcement beam 112d, and having both ends fixed to the supporting portion 111d and the supporting portion 111a, respectively (to connect adjoining supporting portions).

Between the detection beam 113j and the supporting portion 111e, a detection beam 113k is provided separated by predetermined intervals from the detection beam 113j and the supporting portion 111e, and in parallel with the detection beam 113j. The detection beam 113k connects an end of the reinforcement beam 112h on the side of the supporting portion 111e, with an end of the reinforcement beam 112e on the side of the supporting portion 111e.

An approximately central part in the longitudinal direction of the detection beam 113j and an approximately central part in the longitudinal direction of the detection beam 113k, which face each other, are connected by a detection beam 113l placed to be orthogonal to the detection beam 113j and the detection beam 113k.

The detection beams 113a-113l are provided, for example, at the upper end in the thickness direction of the supporting portions 111a-111e, and may be formed from an active layer of an SOI substrate. The thickness of the detection beams 113a-113l (the width in the short direction) may be set to, for example, approximately 75 µm. The upper surfaces of the detection beams 113a-113l are virtually flush with the upper surfaces of the supporting portions 111a-111e. The thickness of the detection beams 113a-113l may be set to, for example, approximately 50 µm.

The force application point 114a is provided on the lower surface side of the detection beam 113a at the central part in the longitudinal direction (intersection of the detection beam 113a and the detection beam 113c). The detection beams 113a, 113b, and 113c and the force application point 114a constitute one of the detection blocks.

The force application point 114b is provided on the lower surface side of the detection beam 113d at the central part in the longitudinal direction (intersection of the detection beam 113d and the detection beam 113f). The detection beams 113d, 113e, and 113f and the force application point 114b constitute one of the detection blocks.

The force application point 114c is provided on the lower surface side of the detection beam 113g at the central part in the longitudinal direction (intersection of the detection beam 113g and the detection beam 113i) . The detection beams 113g, 113h, and 113i and the force application point 114c constitute one of the detection blocks.

The force application point 114d is provided on the lower surface side of the detection beam 113j at the central part in the longitudinal direction (intersection of the detection beam 113j and the detection beam 1131) . The detection beams 113j, 113k, and 113l and the force application point 114d constitute one of the detection blocks.

The force application points 114a-114d are points to which an external force is applied, and may be formed from, for example, a BOX layer and a supporting layer of an SOI substrate. The lower surfaces of the force application points 114a-114d are virtually flush with the lower surfaces of the supporting portions 111a-111e.

In this way, by taking in a force or displacement from the four force application points 114a-114d, different deformation of the beams can be obtained depending on types of forces. Therefore, a sensor having a sufficient separativeness among the six axes can be realized.

Note that in the sensor chip 110, from the viewpoint of inhibiting stress concentration, it is desirable for a part forming an inner corner to have a round shape.

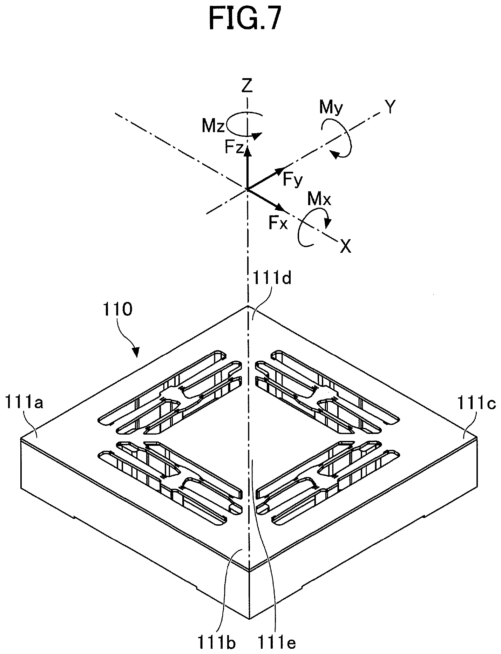

FIG. 7 is a diagram illustrating reference codes that represent forces and moments acting along and around the respective axes. As illustrated in FIG. 7, Fx represents the force in the X-axis direction; Fy represents the force in the Y-axis direction; and Fz represents the force in the Z-axis direction. Also, Mx represents the moment that causes rotation around the axis being the X-axis; My represents the moment that causes rotation around the axis being the Y-axis; and Mz represents the moment that causes rotation around the axis being the Z-axis.

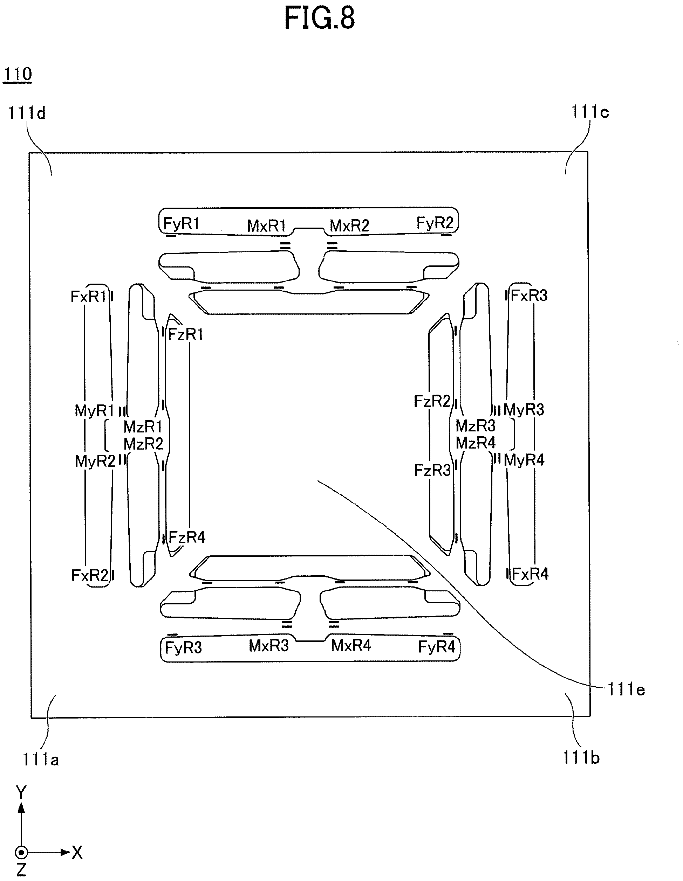

FIG. 8 is a diagram exemplifying a placement of piezo-resistive elements of the sensor chip 110. Piezo-resistive elements are placed at predetermined positions of respective detection blocks corresponding to the four force application points 114a-114d.

Specifically, referring to FIG. 5 and FIG. 8, in a detection block corresponding to the force application point 114a, piezo-resistive elements MxR3 and MxR4 are placed on a line that bisects the detection beam 113a in the longitudinal direction; within respective areas of the detection beam 113a that are close to the detection beam 113c; and at respective positions that are symmetrical with respect to a line that bisects the detection beam 113c in the longitudinal direction (Y-direction) . Also, piezo-resistive elements FyR3 and FyR4 are placed on a line that is located closer to the reinforcement beam 112a than the line that bisects the detection beam 113a in the longitudinal direction; within respective areas of the detection beam 113a that are distant from the detection beam 113c; and at respective positions that are symmetrical with respect to the line that bisects the detection beam 113c in the longitudinal direction.

Also, in a detection block corresponding to the force application point 114b, piezo-resistive elements MyR3 and MyR4 are placed on a line that bisects the detection beam 113d in the longitudinal direction; within respective areas of the detection beam 113d that are close to the detection beam 113f; and at respective positions that are symmetrical with respect to a line that bisects the detection beam 113f in the longitudinal direction (X-direction). Also, piezo-resistive elements FxR3 and FxR4 are placed on a line that is located closer to the reinforcement beam 112b than the line that bisects the detection beam 113d in the longitudinal direction; within respective areas of the detection beam 113d that are distant from the detection beam 113f; and at respective positions that are symmetrical with respect to the line that bisects the detection beam 113f in the longitudinal direction.

Also, piezo-resistive elements MzR3 and MzR4 are placed on a line that is located closer to the detection beam 113f than the line that bisects the detection beam 113d in the longitudinal direction; within respective areas of the detection beam 113d that are close to the detection beam 113f; and at respective positions that are symmetrical with respect to the line that bisects the detection beam 113f in the longitudinal direction. Piezo-resistive elements FzR2 and FzR3 are placed on a line that is located closer to the supporting portion 111e than the line that bisects the detection beam 113e in the longitudinal direction; within respective areas of the detection beam 113e that are close to the detection beam 113f; and at respective positions that are symmetrical with respect to the line that bisects the detection beam 113f in the longitudinal direction.

Also, in a detection block corresponding to the force application point 114c, piezo-resistive elements MxR1 and MxR2 are placed on a line that bisects the detection beam 113g in the longitudinal direction; within respective areas of the detection beam 113g that are close to the detection beam 113i; and at respective positions that are symmetrical with respect to a line that bisects the detection beam 113i in the longitudinal direction (Y-direction). Also, piezo-resistive elements FyR1 and FyR2 are placed on a line that is located closer to the reinforcement beam 112c than the line that bisects the detection beam 113g in the longitudinal direction; within respective areas of the detection beam 113g that are distant from the detection beam 113i; and at respective positions that are symmetrical with respect to the line that bisects the detection beam 113i in the longitudinal direction.

Also, in a detection block corresponding to the force application point 114d, piezo-resistive elements MyR1 and MyR2 are placed on a line that bisects the detection beam 113j in the longitudinal direction; within respective areas of the detection beam 113j that are close to the detection beam 1131; and at respective positions that are symmetrical with respect to a line that bisects the detection beam 1131 in the longitudinal direction (X-direction). Also, piezo-resistive elements FxR1 and FxR2 are placed on a line that is located closer to the reinforcement beam 112d than the line that bisects the detection beam 113j in the longitudinal direction; within respective areas of the detection beam 113j that are distant from the detection beam 1131; and at respective positions that are symmetrical with respect to the line that bisects the detection beam 1131 in the longitudinal direction.

Also, piezo-resistive elements MzR1 and MzR2 are placed on a line that is located closer to the detection beam 113k than the line that bisects the detection beam 113j in the longitudinal direction; within respective areas of the detection beam 113j that are close to the detection beam 1131; and at respective positions that are symmetrical with respect to the line that bisects the detection beam 1131 in the longitudinal direction. Piezo-resistive elements FzR1 and FzR4 are placed on a line that is located closer to the supporting portion 111e than a line that bisects the detection beam 113k in the longitudinal direction; within respective areas of the detection beam 113k that are distant from the detection beam 1131; and at respective positions that are symmetrical with respect to the line that bisects the detection beam 1131 in the longitudinal direction.

In this way, the sensor chip 110 has the piezo-resistive elements placed to be distributed to the respective detection blocks. Thereby, depending on a direction of a force (axis direction) applied (transferred) to the force application points 114a-114d, based on changes of outputs of the multiple piezo-resistive elements placed at the predetermined beams, the displacement in the predetermined axis directions can be detected at the maximum of six axes.

Also, the sensor chip 110 has a structure in which the detection beams 113c, 113f, 113i, and 1131 are made as short as possible to have the detection beams 113b, 113e, 113h, and 113k located as close as possible to the detection beams 113a, 113d, 113g, and 113j, and to secure the length of the detection beams 113b, 113e, 113h, and 113k as long as possible. This structure enables the detection beams 113b, 113e, 113h, and 113k to easily bend like bows, and thereby, enables to ease stress concentration, and to improve the withstand load.

Also, the sensor chip 110 does not have piezo-resistive elements placed on the detection beams 113c, 113f, 113i, and 1131 that are made shorter and less likely to be deformed by a stress. Instead, the piezo-resistive elements are placed close to the detection beams 113a, 113d, 113g, and 113j, which bend easily like bows because these are thinner and longer than the detection beams 113c, 113f, 113i, and 1131, and close to the detection beams 113b, 113e, 113h, and 113k at which a stress becomes the maximum. Consequently, the sensor chip 110 can take in a stress efficiently, and can have an improved sensitivity (on a resistance change of a piezo-resistive element under the same stress).

Note that the sensor chip 110 has dummy piezo-resistive elements placed in addition to the piezo-resistive elements used for detecting a strain. Dummy piezo-resistive elements are placed such that all the piezo-resistive elements including the piezo-resistive elements used for detecting a strain to be point symmetric with respect to the center of the supporting portion 111e.

Here, the piezo-resistive elements FxR1-FxR4 detect the force Fx, the piezo-resistive elements FyR1-FyR4 detect the force Fy, and the piezo-resistive elements FzR1-FzR4 detect the force Fz. Also, the piezo-resistive elements MxR1-MxR4 detect the moment Mx, the piezo-resistive elements MyR1-MyR4 detect the moment My, and the piezo-resistive elements MzR1-MzR4 detect the moment Mz.

In this way, the sensor chip 110 has the piezo-resistive elements placed to be distributed to the respective detection blocks. Thereby, depending on a direction (axis direction) of a force or displacement applied (transferred) to the force application points 114a-114d, based on changes of outputs of the multiple piezo-resistive elements placed at the predetermined beams, the displacement in the predetermined axis directions can be detected at the maximum of six axes.

Specifically, the sensor chip 110 can detect displacement (Mx, My, Fz) in the Z-axis direction based on deformation of the predetermined detection beams. In other words, the moments (Mx, My) in the X-axis direction and in the Y-axis direction can be detected based on deformation of the detection beams 113a, 113d, 113g, and 113j as the first detection beams. Also, the force (Fz) in the Z-axis direction can be detected based on deformation of the detection beams 113e and 113k as the second detection beams.

Also, the sensor chip 110 can detect displacement (Fx, Fy, Mz) in the X-axis direction and in the Y-axis direction based on deformation of the predetermined detection beams. In other words, the forces (Fx, Fy) in the X-axis direction and in the Y-axis direction can be detected based on deformation of the detection beams 113a, 113d, 113g, and 113j as the first detection beams. Also, the moment (Mz) in the Z-axis direction can be detected based on deformation of the detection beams 113d and 113j as the first detection beams.

Variable thickness and width of the detection beams enable to make the detection sensitivities uniform, and to improve the detection sensitivities.

However, the number of piezo-resistive elements may be reduced to realize a sensor chip that detects displacement in predetermined axis directions of five axes or less.

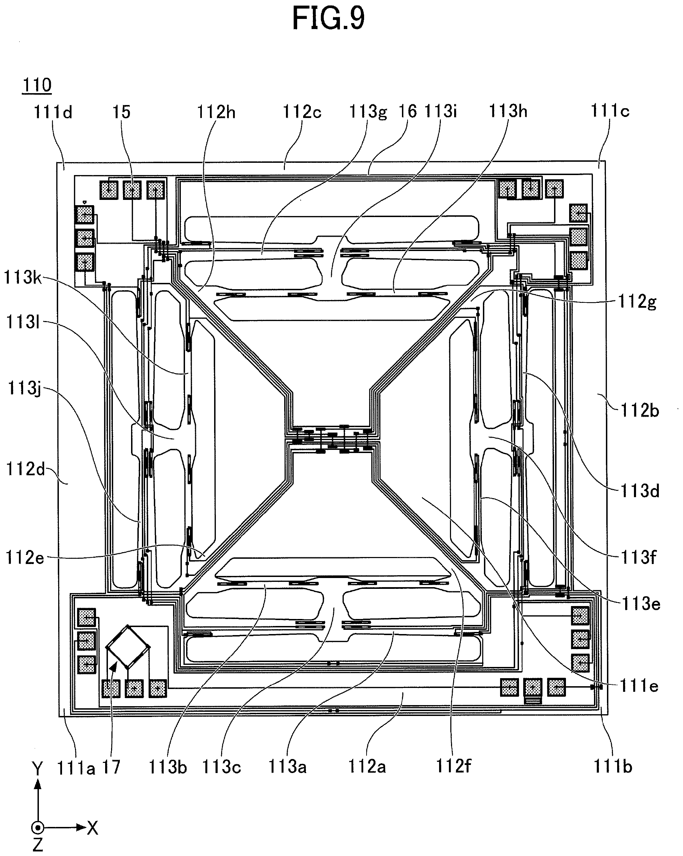

FIG. 9 includes diagrams exemplifying an electrode placement and wirings in the sensor chip 110, which is a plan view of the sensor chip 110 viewed from the upper side in the Z-axis direction. As illustrated in FIG. 9, the sensor chip 110 has multiple electrodes 15 for taking out electric signals. The electrodes 15 are placed on the upper surfaces of the supporting portions 111a-111d of the sensor chip 110, at which minimum strains are generated when a force is applied to the force application points 114a-114d. The wirings 16 from the piezo-resistive elements to the electrodes 15 can be routed properly on the reinforcement beams and on the detection beams.

In this way, since the reinforcement beams can also be used as alternative routes when pulling out a wiring as necessary, placing the reinforcement beams aside from the detection beams enables to improve the degree of freedom of routing design. Therefore, it is possible to place the piezo-resistive elements at more ideal positions.

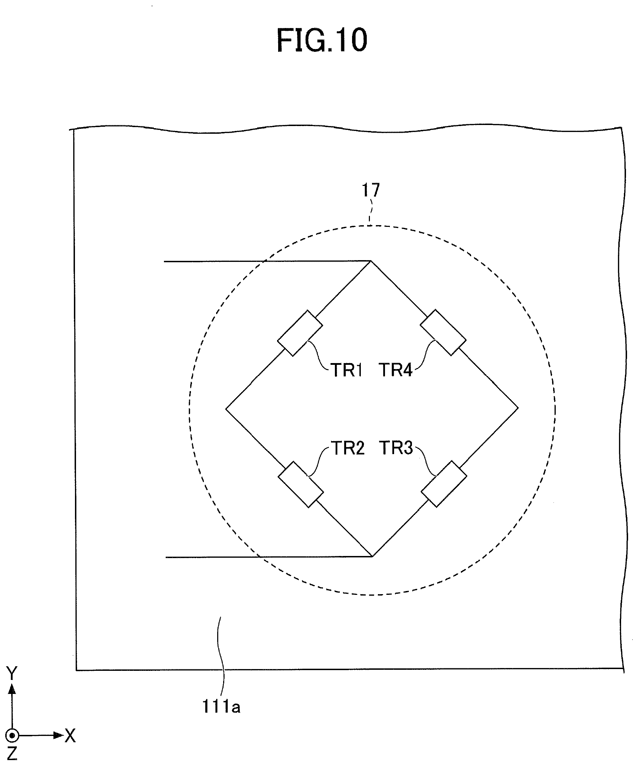

FIG. 10 is an enlarged plan view exemplifying a temperature sensor of the sensor chip 110. As illustrated in FIG. 9 and FIG. 10, the sensor chip 110 has a temperature sensor 17 for applying temperature correction to the piezo-resistive elements to be used for strain detection. The temperature sensor 17 has a configuration in which a bridge connection is formed with four piezo-resistive elements TR1, TR2, TR3, and TR4.

Among the piezo-resistive elements TR1, TR2, TR3, and TR4, two elements facing each other are set to have the same characteristics as the piezo-resistive elements MxR1 and the like used for strain detection. Also, among piezo-resistive elements TR1, TR2, TR3, and TR4, the other two elements facing each other are set to have characteristics different from those of the piezo-resistive elements MxR1 and the like used for strain detection, by changing the impurity concentration by an impurity semiconductor. This makes the bridge imbalanced due to a temperature change, and thereby, enables to detect the temperature.

Note that all of the piezo-resistive elements (MxR1 and the like) used for strain detection are placed horizontally or vertically with respect to the crystal orientation of the semiconductor substrate (silicon or the like) that constitutes the sensor chip 110. This enables to obtain a greater change of resistance for the same strain, and to raise measurement precision of a force and a moment to be applied.

In contrast, the piezo-resistive elements TR1, TR2, TR3, and TR4 that constitute the temperature sensor 17 are placed tilted by 45 degrees with respect to the crystal orientation of the semiconductor substrate (silicon or the like) that constitutes the sensor chip 110. This enables to reduce the resistance change in response to a stress, and thereby, enables to precisely detect only the temperature change.

Also, the temperature sensor 17 is placed on the upper surface of the supporting portion 111a of the sensor chip 110, at which a minimum strain is generated when a force is applied to the force application points 114a-114d. This enables to further reduce the resistance change in response to a stress.

Note that the piezo-resistive element is a representative example of a strain detection element according to the present invention.

### (Strain generator 20)

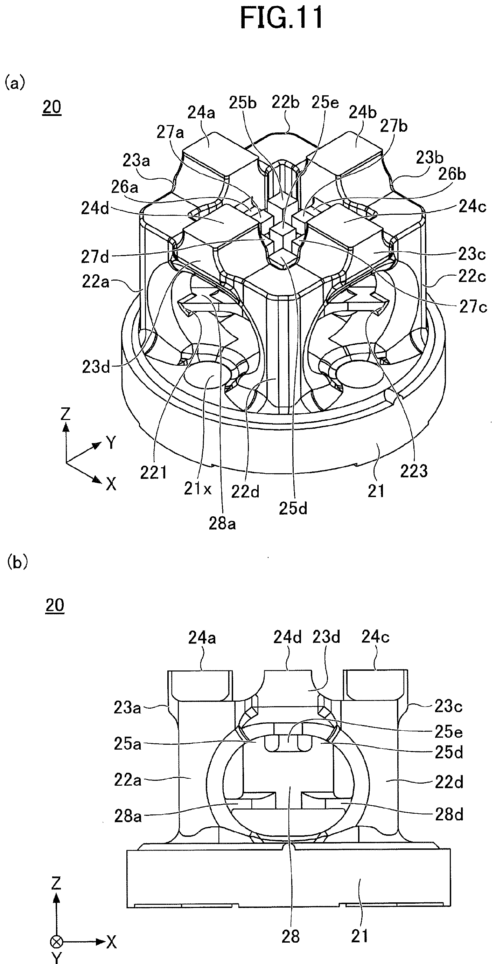

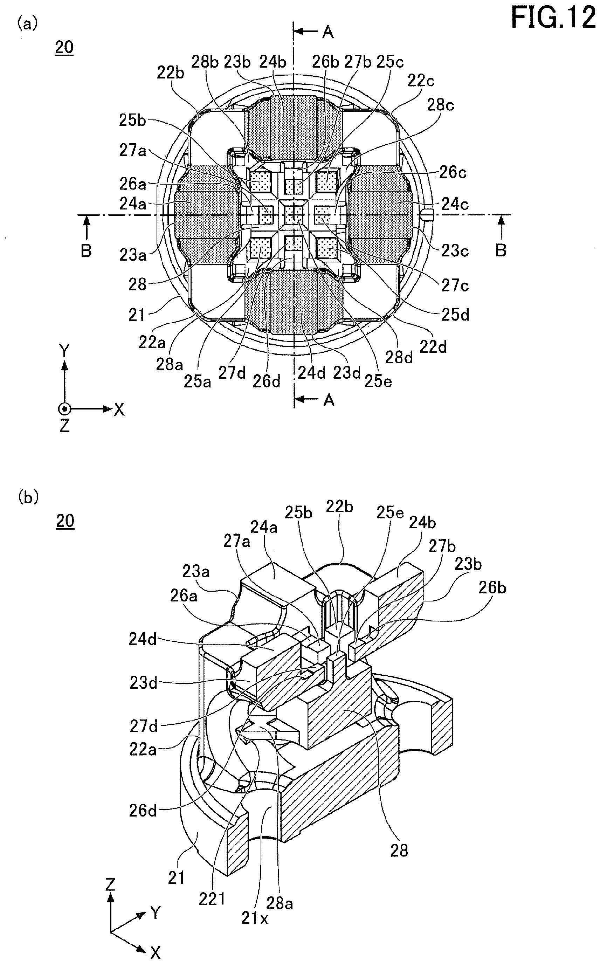

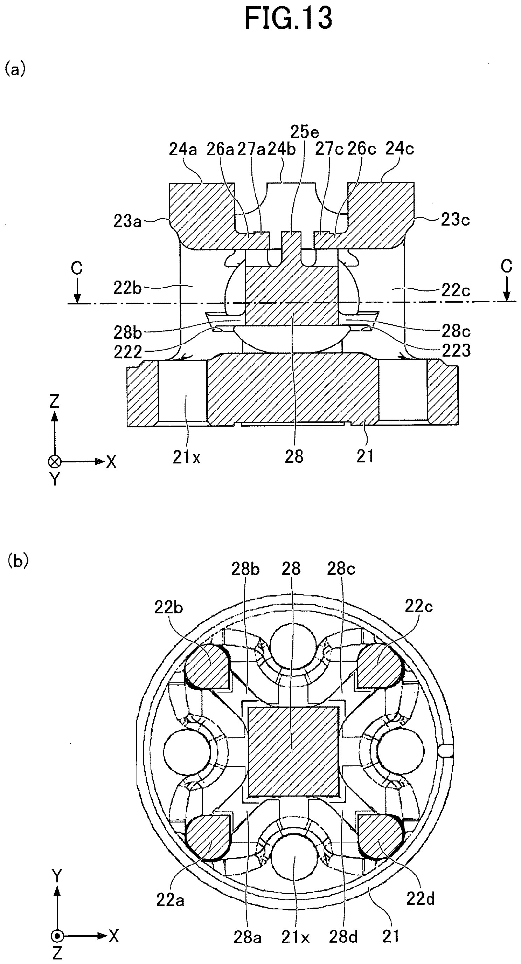

FIG. 11 includes first diagrams exemplifying the strain generator 20; FIG. 11(a) is a perspective view and FIG. 11(b) is a side view. FIG. 12 includes second diagrams exemplifying the strain generator 20; FIG. 12(a) is a plan view and FIG. 12 (b) is a vertical cross-sectional perspective view taken along a line A-A line in FIG. 12 (a) . In FIG. 12(a), for the sake of convenience, surfaces having an equivalent height are illustrated with a dot pattern of the same density. FIG. 13 includes third diagrams exemplifying the strain generator 20; FIG. 13(a) is a vertical cross-sectional view taken along a line B-B in FIG. 12(a), and FIG. 13(b) is a horizontal cross-sectional view taken along a line C-C in FIG. 13(a) .

As illustrated in FIG. 11 to FIG. 13, the strain generator 20 includes a base 21 directly attached to a holding part, a pillar 28 used as a sensor chip mounting part on which the sensor chip 110 is mounted, and pillars 22a-22d separately placed around the pillar 28.

In more detail, the strain generator 20 has the four pillars 22a-22d placed on the upper surface of the approximately circular base 21, equidistant to (point-symmetric with respect to) the center of the base 21; and has beams 23a-23d provided in a frame shape to connect adjacent pillars with each other on the opposite side of the base 21. In addition, the pillar 28 is placed above the center of the upper surface of the base 21. Note that the plane shape of the base 21 is not limited to a circular shape, and may be a polygon or the like (e.g., a square or the like).

The pillar 28 is formed to be thicker and shorter than the pillars 22a-22d. Note that the sensor chip 110 is fixed on the pillar 28 so as not project out of the upper surfaces of the pillars 22a-22d.

The pillar 28 is not directly fixed to the upper surface of the base 21, but fixed to the pillars 22a-22d through connection beams 28a-28d. Therefore, there is a space between the upper surface of the base 21 and the lower surface of the pillar 28. The lower surface of the pillar 28 may be flush with the lower surfaces of the connection beams 28a-28d.

The horizontal cross-sectional shape of a part of the pillar 28 to which the connection beams 28a-28d are connected is, for example, a rectangle. The four corners of the rectangle are connected with the pillars 22a-22d facing the four corners of the rectangle through the connection beams 28a-28d. It is desirable that positions 221-224 at which the connection beams 28a-28d are connected with the pillars 22a-22d are positioned lower than the middle point in the height direction of the pillars 22a-22d. The reason will be described later. Note that the horizontal cross-sectional shape of a part of the pillar 28 to which the connection beams 28a-28d are connected is not limited to a rectangle; the shape may be a circle, a polygon or the like (e.g., a hexagon or the like).

The connection beams 28a-28d are placed to be equidistant to (point-symmetric with respect to) the center of the base 21, and separated from the upper surface of the base 21 by a predetermined distance to be approximately parallel with the upper surface of the base 21. It is desirable that the connection beams 28a-28d are formed to have the thickness or width (rigidity) that is thinner and narrower than the pillars 22a-22d and the beams 23a-23d so as not to hinder deformation of the strain generator 20.

In this way, the upper surface of the base 21 is separated from the lower surface of the pillar 28 by a predetermined distance. The predetermined distance may be set to, for example, approximately several mm. In the case of adopting the structure in which the pillar 28 is not directly fixed to the upper surface of the base 21, but the pillar 28 is fixed to the pillars 22a-22d through the connection beams 28a-28d, a longer distance between the upper surface of the base 21 and the lower surface of the pillar 28 makes the pillar 28 less deformed when fastened by screws, and consequently, lowers the Fz output (offset) of the sensor chip 110. Meanwhile, a longer distance between the upper surface of the base 21 and the lower surface of the pillar 28 lowers the output of the sensor chip 110 (lowers the sensitivity).

This is the reason why it is desirable that the pillar 28 is connected with the pillars 22a-22d at positions lower than the middle point of the pillars 22a-22d. This enables to lower the Fz output (offset) of the sensor chip 110 when fastened by screws while securing the sensitivity of the sensor chip 110.

In the case of attempting to achieve a lowered Fz output (offset) of the sensor chip 110 when fastened by screws by raising the rigidity of the base 21, the thickness of the base 21 needs to be thickened, and the size of the entire force sensor device becomes greater. Adopting the structure in which the pillar 28 is not directly fixed to the upper surface of the base 21, but the pillar 28 is fixed to the pillars 22a-22d through the connection beams 28a-28d, enables to lower the Fz output (offset) of the sensor chip 110 when fastened by screws without enlarging the size of the entire force sensor device.

Also, adopting the structure in which the pillar 28 is not directly fixed to the upper surface of the base 21, but the pillar 28 is fixed to the pillars 22a-22d through the connection beams 28a-28d, enables to improve the separativeness between the moment components (Mx, My) when the moments (Mx, My) are received as input, and the force components (Fx, Fy) in the translation direction.

The base 21 has through holes 21x for having the strain generator 20 fastened to a holding part by using screws or the like. In the present embodiment, although four through holes 21x are provided in the base 21, the number of through holes 21x may be determined discretionarily.

An outline shape of the strain generator 20 excluding the base 21 may be, for example, the shape of a rectangular parallelepiped that is approximately 5000 µm long, approximately 5000 µm wide, and approximately 7000 µm high. The horizontal cross-sectional shape of the pillars 22a-22d may be, for example, a square with an approximately 1000-µm side. The horizontal cross-sectional shape of the pillar 28 may be, for example, a square with an approximately 2000-µm side.

However, in the sensor chip 110, from the viewpoint of inhibiting stress concentration, it is desirable for a part forming an inner corner to have a round shape. For example, it is desirable that the surfaces of the pillars 22a-22d toward the center of the upper surface of the base 21, are formed to have a round shape in the vertical direction. Similarly, it is desirable that the surfaces of the beams 23a-23d facing the upper surface of the base 21, are formed to have a round shape in the horizontal direction.

Note that a round-shaped part having a greater curvature radius brings a greater effect of inhibiting stress concentration. However, if the curvature radius of a round-shaped part is made excessively great, the strain generator 20 becomes greater, and consequently, the force sensor device 1 becomes greater as a whole. Therefore, there is a limit on increasing the curvature radius of a round-shaped part.

Thereupon, in the present embodiment, as illustrated in FIG. 12(a) by a pattern with dense dots, each of the beams 23a-23d is formed such that the central part is thicker than both ends in the longitudinal direction, in consideration of excessive stress concentration that would be generated in the central part when Mx, My, and Mz are applied to the force sensor device 1. Furthermore, the central part in the longitudinal direction of each of the beams 23a-23d has a projecting part that projects inwards and outwards with respect to the adjoining side surfaces of the pillars 22a-22d.

This structure makes the cross-sectional area of the central part in the longitudinal direction of each of the beams 23a-23d greater, and thereby, when Mx, My, and Mz are applied to the force sensor device 1, it is possible to reduce a stress to be generated in the central part in the longitudinal direction of each of the beams 23a-23d, in which the stress would concentrate more without this structure. In other words, this structure enables to ease concentration of the stress to the central part in the longitudinal direction of each of the beams 23a-23d.

Also, providing the projecting parts formed by the side surfaces of the central parts in the longitudinal direction of the beams 23a-23d projecting outward with respect to the adjoining side surfaces of the pillars 22a-22d, accompanies remainder spaces on the four side surfaces of the strain generator 20. Therefore, at least a part of each of the active components 32-35 may enter the remainder space, to be efficiently placed on the side surface of the strain generator 20 (see FIG. 1, FIG. 2, etc.).

The active components 32-35 can be placed, for example, on the side surfaces of the strain generator 20 at locations closer to the base 21 than to the beams 23a-23d such that at least a part of each of the active components 32-35 overlaps the projecting part in a plan view (see FIG. 2(a), FIG. 2(b), etc.).

At a central part in the longitudinal direction of the upper surface of each of the beams 23a-23d, a protruding part is provided to protrude upward from the central part in the longitudinal direction of each beams 23a-23d. On the protruding parts, input parts 24a-24d are provided each having a shape of, for example, a square pole. The input parts 24a-24d are parts to which a force is applied from the outside. In response to a force applied to the input parts 24a-24d, the beams 23a-23d and the pillars 22a-22d deform.

Providing the four input parts 24a-24d in this way enables to improve the withstand load of the beams 23a-23d compared with, for example, a structure having one input part.

At the four corners of the upper surface of the pillar 28, four pillars 25a-25d are placed, and at a central part of the upper surface of the pillar 28, a pillar 25e as a fourth pillar is placed. The pillars 25a-25e are formed to have the same height.

In other words, the upper surfaces of the pillars 25a-25e are positioned on the same plane. The upper surfaces of the pillars 25a-25e serve as junction parts to adhere to the lower surface of the sensor chip 110.

At central parts in the longitudinal direction of the inward surfaces of the beams 23a-23d, beams 26a-26d are provided to protrude horizontally inward from the inward surfaces of the beams 23a-23d, respectively. The beams 26a-26d are beams to transfer deformation of the beams 23a-23d and the pillars 22a-22d to the sensor chip 110. Also, on the end side of the upper surface of each of the beams 26a-26d, protruding parts 27a-27d are provided to protrude upward from the end side of the upper surface of each of the beams 26a-26d.

The protruding parts 27a-27d are formed to have the same height. In other words, the upper surfaces of the protruding parts 27a-27d are positioned on the same plane. The upper surfaces of protruding parts 27a-27d serve as junction parts to adhere to the lower surface of the sensor chip 110. As being connected with the beams 23a-23d serving as movable parts, the beams 26a-26d and the protruding parts 27a-27d deform when a force is applied to the input parts 24a-24d.

Note that in a state where no force is applied to the input parts 24a-24d, the upper surfaces of the pillars 25a-25e and the upper surfaces of the protruding parts 27a-27d are positioned on the same plane.

In the strain generator 20, it is desirable that the parts including the base 21, the pillars 22a-22d, the pillar 28, the beams 23a-23d, the input parts 24a-24d, the pillars 25a-25e, the beams 26a-26d, and the protruding parts 27a-27d are formed to be integrated from the viewpoint of securing the rigidity and precise manufacturing. As the material of the strain generator 20, a hard metal material, for example, SUS (stainless steel) may be used. Among others, it is desirable to use SUS 630, which is hard and has a high mechanical strength in particular.

In this way, similar to the sensor chip 110, the strain generator 20 having a structure equipped with pillars and beams can detect deformation that appears differently in the six axes depending on an applied force, and hence, can transfer the deformation with a good separativeness in the six axes to the sensor chip 110.

In other words, the sensor chip 110 transfers a force applied to the input parts 24a-24d to the sensor chip 110 through the pillars 22a-22d, the beams 23a-23d, and the beams 26a-26d; and the sensor chip 110 detects the displacement. Then, in the sensor chip 110, output of the axes can be obtained from bridge circuits constituted with one bridge circuit per axis.

### (Manufacturing process of force sensor device 1)

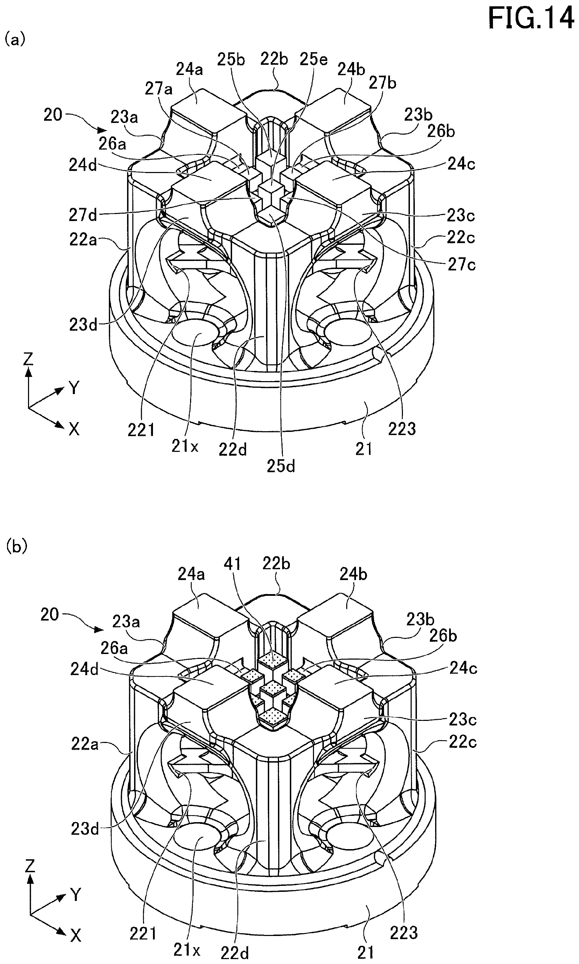

FIG. 14 to FIG. 19 are diagrams exemplifying a manufacturing process of the force sensor device 1. First, a strain generator 20 is manufactured as illustrated in FIG. 14(a). The strain generator 20 may be formed to be integrated by, for example, molding, cutting, or wire-cut EDM (electrical discharge machining) . As the material of the strain generator 20, a hard metal material, for example, SUS (stainless steel) may be used. Among others, it is desirable to use SUS 630, which is hard and has a high mechanical strength in particular. In the case of manufacturing the strain generator 20 by molding, for example, metal particles and resin as a binder are put into a metallic mold, molded, and then, sintered to evaporate the resin; thus, the strain generator 20 formed of the metal can be manufactured.

Next, in a process illustrated in FIG. 14(b), an adhesive 41 is applied to the upper surfaces of the pillars 25a-25e and the upper surfaces of the protruding parts 27a-27d. As the adhesive 41, for example, an epoxy-based adhesive may be used. From the viewpoint of the yield strength to a force applied from the outside, it is desirable that the adhesive 41 has Young's modulus of 1GPa or greater, and is 20 µm or less in thickness.

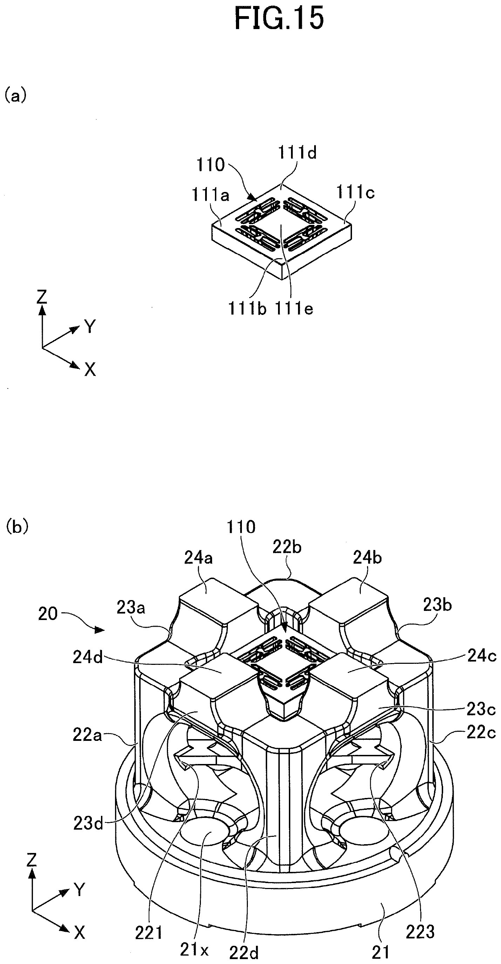

Next, in a process illustrated in FIG. 15(a), a sensor chip 110 is manufactured. The sensor chip 110 may be manufactured with a known method; for example, an SOI substrate is prepared and an etching process (e.g., reactive ion etching) and the like is applied to the prepared substrate. Also, electrodes and wirings may be manufactured by forming a metal film of aluminum or the like on the surface of the substrate with sputtering or the like, and then, forming a pattern on the metal film with photolithography.

Next, in a process illustrated in FIG. 15(b), the sensor chip 110 is placed in the strain generator 20 so that the lower surface of the sensor chip 110 contacts the adhesive 41 that has been applied to the upper surfaces of the pillars 25a-25e and the upper surfaces of the protruding parts 27a-27d, while being applied with pressure. Then, the adhesive 41 is heated to a predetermined temperature to harden. This process fixes the sensor chip 110 in the strain generator 20. Specifically, the supporting portions 111a-111d of the sensor chip 110 are fixed on the pillar 25a-25e, the supporting portion 111e is fixed on the pillar 25e, and the force application points 114a-114d are fixed on protruding part 27a-27d.

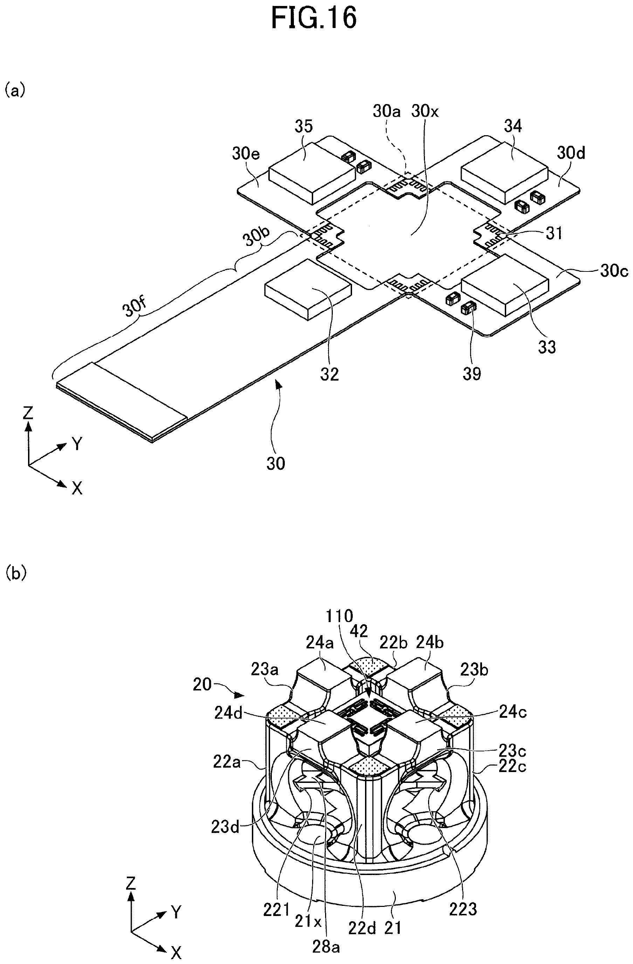

Next, in a process illustrated in FIG. 16(a), a board 30 is prepared, on which active components 32-35 and passive components 39 are mounted.

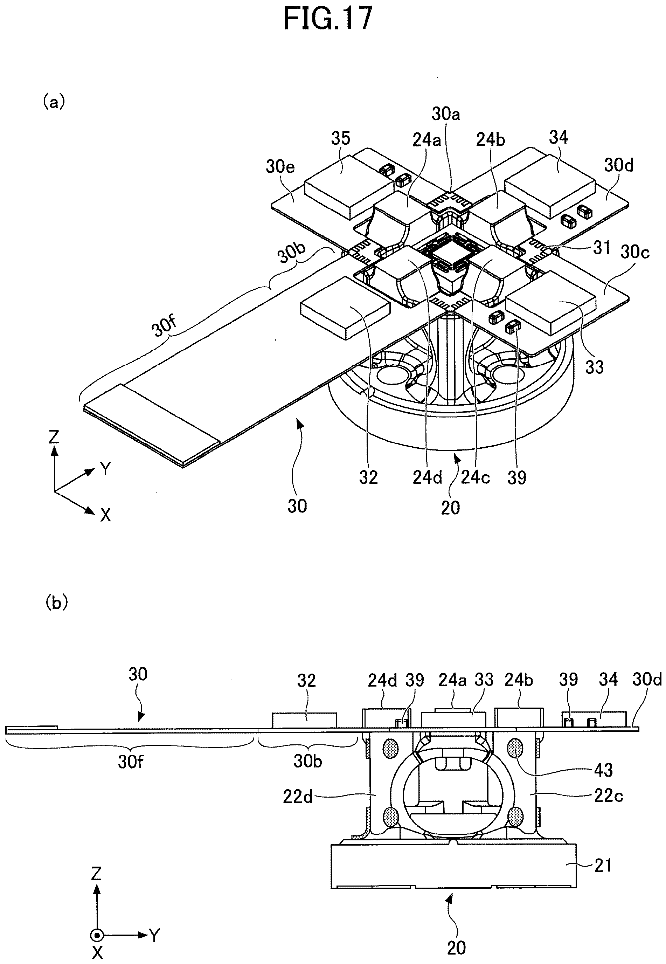

The board 30 has an end surface holding part 30a to be fixed to the upper surfaces (end surfaces) of the pillars 22a-22d in a process of FIG. 17(a). In FIG. 16(a), an area where a cross crosses is the end surface holding part 30a. Electrodes 31 (bonding pads) are provided at four corners of the end surface holding part 30a.

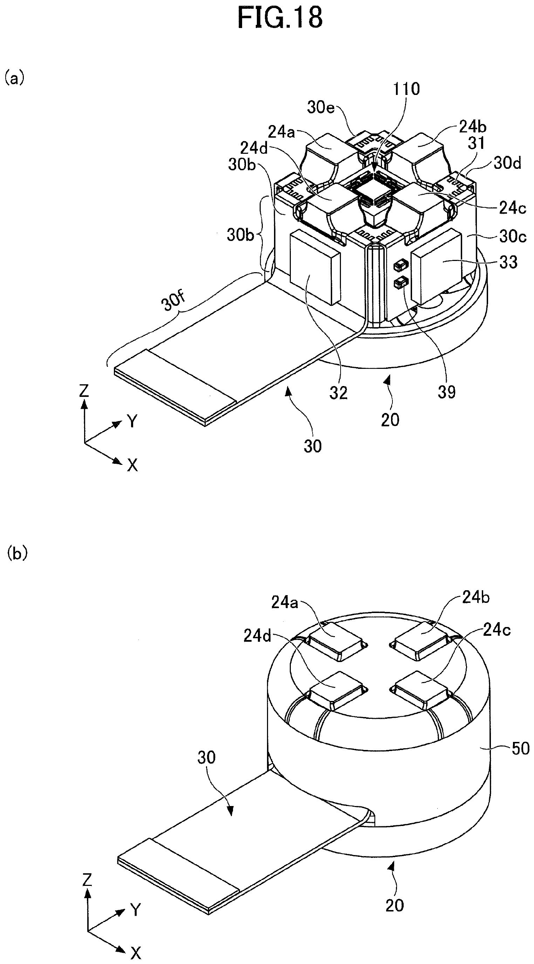

The board 30 extends in four directions from the end surface holding part 30a, and has side surface holding parts 30b-30e that are to be bent with respect to the end surface holding part 30a and to be fixed to the side surfaces of the pillars 22a-22d, respectively, in a process of FIG. 18(a).

In the present embodiment, the active component 32 is mounted on the side surface holding part 30b; the active component 33 and the passive components 39 are mounted on the side surface holding part 30c; the active component 34 and the passive components 39 are mounted on the side surface holding part 30d; and the active component 35 and the passive components 39 are mounted on the side surface holding part 30e. However, not all of the side surface holding parts 30b-30e need to have active components mounted; it is sufficient that at least one of the side surface holding parts 30b-30e has an active component mounted.

The board 30 has an extending part 30f that extends from the side surface holding part 30b. At the end of the extending part 30f, input/output terminals are arranged (not illustrated), through which electric input and output are performed with an external circuit (a controller or the like) to be connected with the force sensor device 1.

The end surface holding part 30a has an opening 30x to expose the sensor chip 110 and the input parts 24a-24d when fixed to the upper surfaces (end surfaces) of the pillars 22a-22d in a process of FIG. 17 (a) . The opening 30x extends from the end surface holding part 30a to cut into respective parts of the side surface holding parts 30b-30e.

In this way, the board 30 has, as an example, a cross-shaped external appearance, in consideration of the opening 30x to be provided, flexibility of wiring routes, and the active components 32-35 to be mounted.

Next, in a process illustrated in FIG. 16(b), an adhesive 42 is applied to the upper surfaces of the pillars 22a-22d. As the adhesive 42, for example, an epoxy-based adhesive may be used. Note that the adhesive 42 is used for fixing the board 30 on the strain generator 20, and a force is not applied from the outside. Therefore, a general-purpose adhesive can be used.

Next, in a process illustrated in FIG. 17(a), the board 30 is placed on the strain generator 20 so that four corners of the lower surface of the end surface holding part 30a of the board 30 contact the adhesive 42 applied to the upper surfaces of the pillars 22a-22d. At this time, the side surface holding parts 30b-30e are not bent with respect to the end surface holding part 30a.

Next, in a process illustrated in FIG. 17(b), an adhesive 43 is applied to two outward side surfaces of each of the pillars 22a-22d (e.g., two locations in the vertical direction). However, in an area to adhere to the back of the board 30 where the active component 32 is mounted, the adhesive 43 is applied so as to extend from lower parts on the side surfaces of the pillars 22a and 22d to the circumference of the upper surface of the base 21.

As the adhesive 43, for example, an epoxy-based adhesive may be used. Note that the adhesive 43 is used for fixing the board 30 on the strain generator 20, and a force is not applied from the outside. Therefore, a general-purpose adhesive can be used. As the adhesive 43, the same adhesive as the adhesive 42 may be used. Alternatively, as the adhesive 42, in order to secure ease of wirebonding, a comparatively hard (higher Young's modulus) adhesive containing a filler may be used, whereas as the adhesive 43, in order to secure flexibility to follow deformation of the strain generator 20, a comparatively soft (lower Young's modulus) adhesive may be used. Also, the adhesive 43 may be applied along with the adhesive 42 in the process of FIG. 16(b).

Next, in a process illustrated in FIG. 18(a), the side surface holding parts 30b-30e horizontally protruding from the end surface holding part 30a, which has been placed on the strain generator 20, are bent toward the respective side surfaces of the strain generator 20. Then, while the board 30 is being pressed against the strain generator 20, the adhesives 42 and 43 are heated to a predetermined temperature to harden. This process fixes the board 30 to the strain generator 20. Note that the board 30 is a flexible board sufficiently softer than the strain generator 20, and only partially adheres to the strain generator 20. Therefore, the board 30 does not hinder deformation of the strain generator 20.

Next, the electrodes 31 of the board 30 are electrically connected with the corresponding electrodes 15 of the sensor chip 110 by bonding wires (metal wires such as gold wires or copper wires) or the like (not illustrated). On the board 30, the electrodes 31 are formed at four corner areas of the end surface holding part 30a that overlap the upper surfaces (end surfaces) of the pillars 22a-22d in a plan view. The upper surfaces (end surfaces) of the pillars 22a-22d are areas least strained when a force is applied to the input parts 24a-24d. Therefore, these areas can be easily pressured by ultrasound, and wirebonding can be performed stably. The force sensor device 1 is finished with the above process.

In this way, since the force sensor device 1 can be made of only three parts, namely, the sensor chip 110, the strain generator 20, and the board 30, it is easy to assemble. Also, since locations at which positioning is required are designed to be minimum, it is possible to avoid precision degradation caused by mounting.

Also, in the strain generator 20, since all of the connection parts with the sensor chip 110 (the upper surfaces of the pillars 25a-25e and the upper surfaces of the protruding parts 27a-27d) are on the same plane, positioning of the sensor chip 110 with respect to the strain generator 20 can be done at one try, which makes it easy to mount the sensor chip 110 on the strain generator 20.

Note that as illustrated in FIG. 18(b), a process of adhering to a cover may be provided. In the process illustrated in FIG. 18(b), the cover 50 that has openings to expose the input parts 24a-24d adheres to the circumference of the base 21, so as to cover an upper part of the strain generator 20 above the base 21, and the sensor chip 110. As the cover 50, for example, a metal material having the surface applied with nickel plating or the like may be used.

The board 30 adheres to the strain generator 20 and the parts of the board 30 on which the active components 32-35 are mounted are contained within the height size of the strain generator 20 when bent. Therefore, the board 30 does not hinder attachment of the cover 50.

Providing the cover 50 enables to take measures against dust and electrical noise. In particular, electrically connecting the strain generator 20 and the cover 50 made of metal to the GND of the board 30 by using silver paste or the like enables to improve noise tolerance (signal stability) . In this case, it is desirable to provide a sequence of GND terminals on the board 30, which are different from those provided for the sensor chip 110 and the active components 32-35, and to electrically connect these GND terminals with the strain generator 20 and the cover 50.

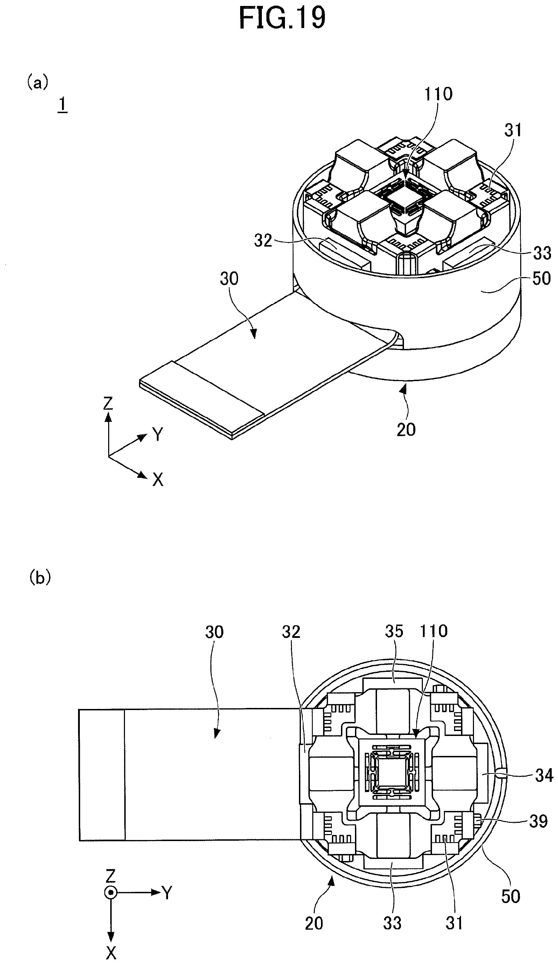

As illustrated in FIG. 19, the active components 32-35 are efficiently placed between the side surfaces of the strain generator 20 and the inner wall surface of the cover 50, without contacting the inner wall surface of the cover 50. This enables to minimize the total size of the force sensor device 1. Note that in FIG. 19, for the sake of convenience, a state is illustrated in which a part of the cover 50 is removed on the upper side.

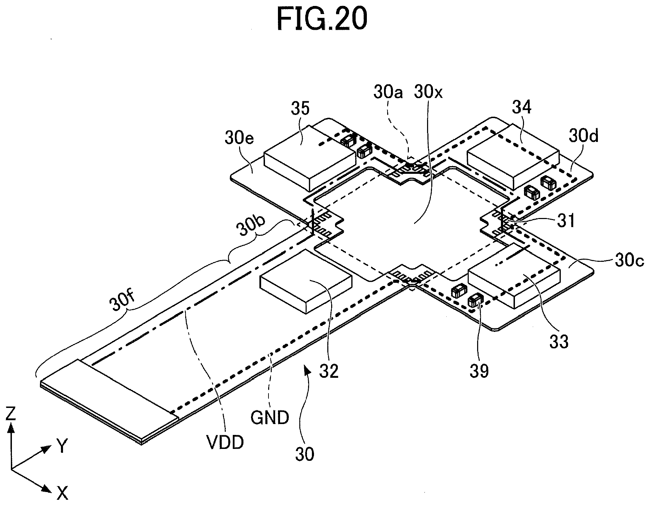

FIG. 20 is a diagram illustrating an example of wiring routes of the power source and the GND of the board 30. As illustrated in FIG. 20, on the board 30, a wiring pattern of the power source (VDD) can be routed starting on the side of the extending part 30f, passing through the side surface holding part 30b, and reaching the side surface holding part 30e, the side surface holding part 30d, and the side surface holding part 30c in this order. Also, a wiring pattern of the GND can be routed starting on the side of the extending part 30f, passing through the side surface holding part 30b, and reaching the side surface holding part 30c, the side surface holding part 30d, and the side surface holding part 30e in this order. Note that since noise tolerance falls if the wiring patterns of the power source (VDD) and the GND are formed to have loop shapes, it is desirable to terminate the wiring patterns of the power source (VDD) and the GND at the side surface holding part 30c and the side surface holding part 30e, respectively, so as not to return to the side surface holding part 30b.

Meanwhile, analog electric signals output by the sensor chip 110 (signals corresponding to the forces Fx, Fy and Fz, and the moments Mx, My, and Mz) vary in sensitivity, and there exist signals with high sensitivities and signals with low sensitivities. Since a signal with a low sensitivity has a low noise tolerance, it is desirable for an active component (control IC) that receives a signal with a low sensitivity as input, to be connect with the GND at a point where the wiring length is as short as possible (a GND point on the side of the side surface holding part 30c) from the viewpoint of noise tolerance.

Thereupon, in the present embodiment, the active component 33, which receives as input a signal with the lowest sensitivity and a signal with the second lowest sensitivity among the analog electric signals output by the sensor chip 110, is mounted on the side surface holding part 30c. Also, the active component 34, which receives as input a signal with the third lowest sensitivity and a signal with the fourth lowest sensitivity among the analog electric signals output by the sensor chip 110, is mounted on the side surface holding part 30d. Then, the active component 35, which receives as input the remaining two signals, is mounted on the side surface holding part 30e.

This enables to reduce the variation in noise tolerance in the analog electric signals output by the sensor chip 110,

### <Modified example 1 in first embodiment >

In a modified example 1 in the first embodiment, an example of a force sensor device will be described, in which the number of active components mounted on the board is different from that in the first embodiment. Note that in the modified example 1 in the first embodiment, description may be omitted for the same elements as in the embodiment that has been already described.

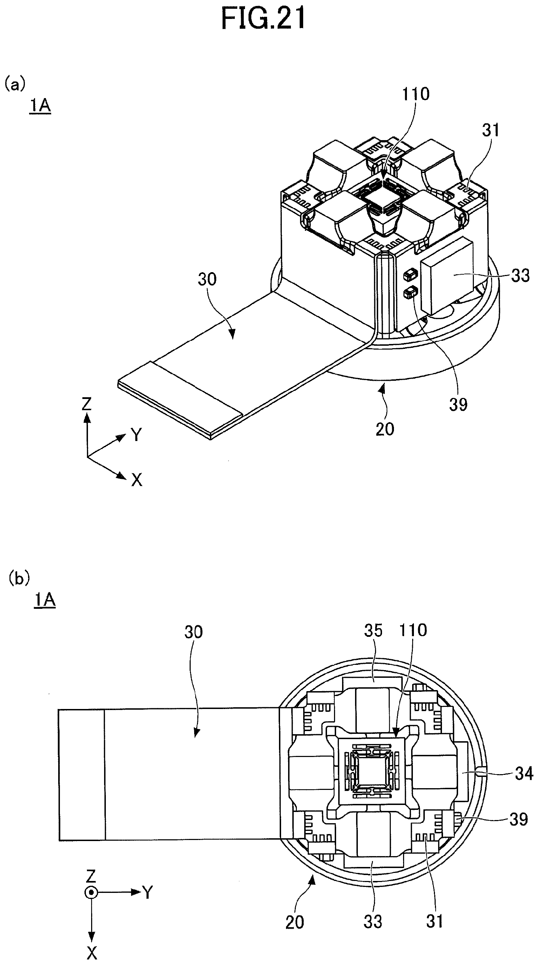

FIG. 21 includes diagrams exemplifying a force sensor device according to the modified example 1 in the first embodiment; FIG. 21(a) is a perspective view and FIG. 21(b) is a plan view. As illustrated in FIG. 21, the force sensor device 1A has only active components 33-35 mounted as control ICs on the board 30, and does not have an active component 32 (calculation IC) mounted, which is different from the force sensor device 1 (see FIG. 1).

In this way, the active component 32 (calculation IC) does not necessarily need to be mounted on the board 30. In this case, the active components 33-35 as control ICs may output digital electric signals to which various corrections have been applied, and data aggregation and calculation may be performed by an external circuit connected to the board 30.

### <Modified example 2 in first embodiment>

In a modified example 2 in the first embodiment, an example of a force sensor device that has a force receiving plate will be described. Note that in the modified example 2 in the first embodiment, description may be omitted for the same elements as in the embodiments that have been already described.

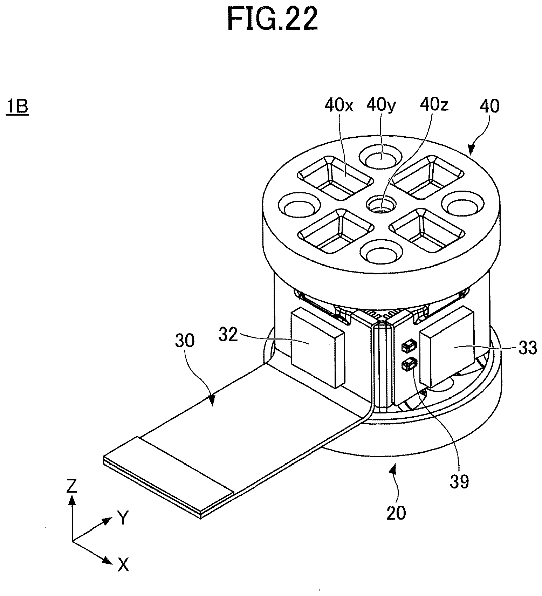

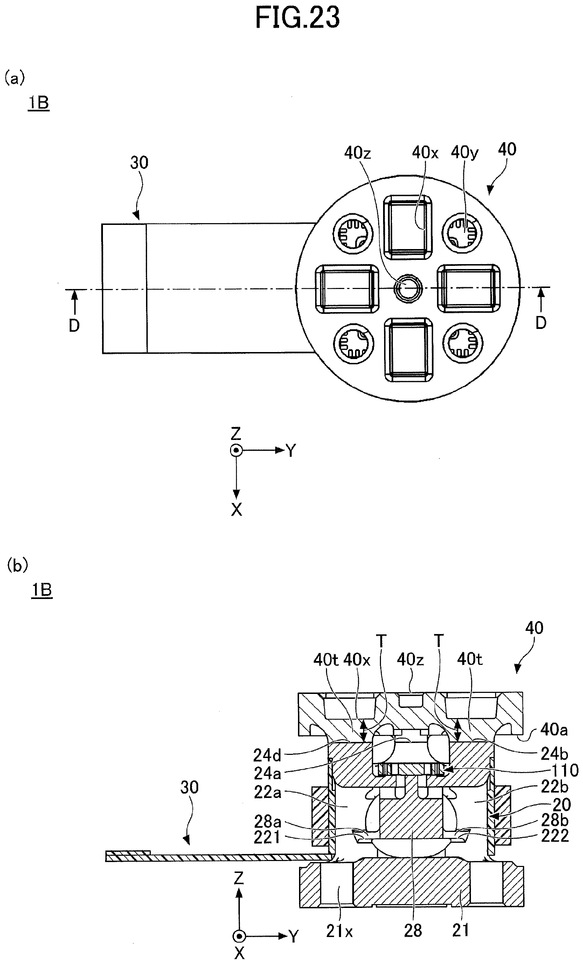

FIG. 22 is a perspective view exemplifying a force sensor device according to the modified example 2 in the first embodiment. FIG. 23 includes diagrams exemplifying a force sensor device according to the modified example 2 in the first embodiment; FIG. 23(a) is a plan view and FIG. 23 (b) is a vertical cross-sectional view taken along a line D-D in FIG. 23(a) . Referring to FIG. 22 and FIG. 23, the force sensor device 1B has a force receiving plate 40 provided on input parts 24a-24d of a strain generator 20, which is different from the force sensor device 1 (see FIG. 1).

Although a plane shape of the force receiving plate 40 can be, for example, circular, the shape may be rectangular or the like. On the upper surface of the force receiving plate 40, four recesses 40x having a rectangular plane shape, and four through holes 40y having a circular plane shape are provided. Also, at the center on the upper surface of the force receiving plate 40, a recess 40z having a circular plane shape is provided.

The four recesses 40x are placed so as to cover the input parts 24a-24d of the strain generator 20, respectively, and the bottom surfaces of the recesses 40x project toward the strain generator 20 to contact the upper surfaces of the input parts 24a-24d of the strain generator 20, respectively. Note that the plane shapes of the recess 40x, the through hole 40y, and the recess 40z can be determined discretionarily.

Although not illustrated, protrusions (or protrusion receiving parts) may be formed on the upper surfaces of the input parts 24a-24d, and protrusion receiving parts (or protrusions) may be formed on the bottom surfaces of the recesses 40x projecting toward the strain generator 20 such that the protrusions (or protrusion receiving parts) on the upper surfaces of the input parts 24a-24d fit with the protrusion receiving parts (or protrusions) on the bottom surfaces of the recesses 40x, so that positioning can be performed between the force receiving plate 40 and the strain generator 20.

The recesses 40x and the recess 40z may be used for positioning of the force sensor device 1A when to be attached to a holding part as necessary. Also, the through holes 40y are screw holes to attach the force sensor device 1A to a holding part by using screws or the like.

As the material of the force receiving plate 40, for example, SUS (stainless steel) 630 may be used. The force receiving plate 40 may be fixed to the strain generator 20, for example, by welding.

Providing the force receiving plate 40 in this way enables to input a force into the input parts 24a-24d of the strain generator 20 from the outside through the force receiving plate 40.

Also, in the present embodiment, in the force receiving plate 40, parts to be joined with the input parts 24a-24d of the strain generator 20 are formed as projection parts 40t that stand in recesses provided on the lower surface 40a of the force receiving plate 40, and project out of the lower surface 40a of the force receiving plate 40. The side surfaces of the projection parts 40t have a round shape. This enables to enlarge the curvature radius of the round parts, without thickening the force receiving plate 40 unnecessarily (without scaling up the force sensor device 1B in the Z direction). Consequently, in the force receiving plate 40, the stress generated in the projection parts 40t can be reduced, and the withstand load can be improved.

Also, the thickness of the projection parts 40t ("T" in FIG. 23 (b)) being thin enables to lower a laser output when laser welding is performed between the force receiving plate 40 and the input parts 24a-24d. Consequently, the remaining heat stress acting on the force receiving plate 40 can be reduced, and a strain of the force receiving plate 40 can be prevented.

Note that the lower surface 40a of the force receiving plate 40 may be positioned on the same plane as the upper surfaces of the input parts 24a-24d of the strain generator 20. In this case, it is possible to prevent the force receiving plate 40 from deforming when sintering or the like is performed.

### <Modified example 3 in first embodiment>

In a modified example 3 in the first embodiment, an example of a force sensor device will be described, in which the structure of a part joined with a force receiving plate is different from that in the modified example 2 in the first embodiment. Note that in the modified example 3 in the first embodiment, description may be omitted for the same elements as in the embodiments that have been already described.

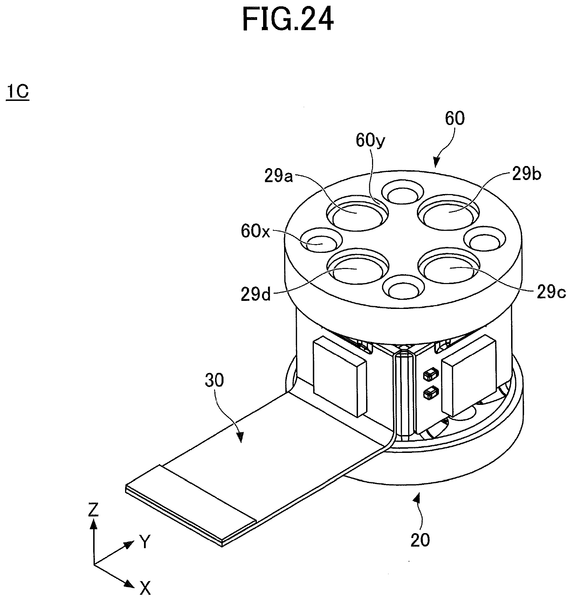

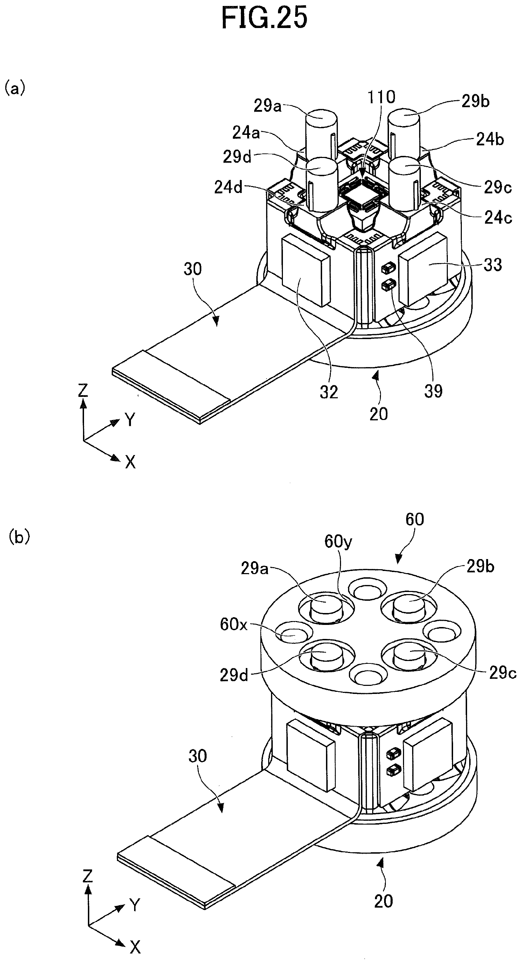

FIG. 24 is a perspective view exemplifying a force sensor device according to the modified example 3 in the first embodiment. FIG. 25 includes diagrams illustrating a junction between a strain generator and a force receiving plate in the force sensor device 1C. Referring to FIG. 24 and FIG. 25, the force sensor device 1C has junctions 29a-29d provided on the upper surfaces of the input parts 24a-24d of the strain generator 20, and has the force receiving plate 40 replaced with a force receiving plate 60, which are different from the force sensor device 1B (see FIG. 22).

As the material of the force receiving plate 60, for example, SUS (stainless steel) 630 may be used. Although a plane shape of the force receiving plate 60 can be, for example, circular, the shape may be rectangular or the like. On the upper surface side of the force receiving plate 60, four recesses 60x having a circular plane shape, and four through holes 60y having a circular plane shape are provided. The four recesses 60x can be used for positioning when attaching the force sensor device 1C to a holding part, or for screw holes when attaching the force sensor device 1C to a holding part by using screws or the like.

In the force sensor device 1C, in order to join the strain generator 20 with the force receiving plate 60, the junction parts 29a-29d provided on the upper surfaces of the input parts 24a-24d of the strain generator 20 as illustrated in FIG. 25(a), are inserted into the four through holes 60y of the force receiving plate 60 as illustrated in FIG. 25(b). Then, by applying plastic deformation (swaging) to the tips of the junction parts 29a-29d projecting out of the force receiving plate 60, the strain generator 20 and the force receiving plate 60 can be joined as illustrated in FIG. 24.

In this way, junction of a strain generator and a force receiving plate is not limited to welding; it may be performed by swaging. Alternatively, junction of a strain generator and a force receiving plate may be performed by adhesion, screw clamping, press fitting, brazing/soldering, or the like.

### <Modified example 4 in first embodiment>

In a modified example 4 in the first embodiment, an example of a force sensor device will be described, in which the structure of a part joined with a force receiving plate is different from that in the modified example 2 in the first embodiment. Note that in the modified example 4 in the first embodiment, description may be omitted for the same elements as in the embodiments that have been already described.

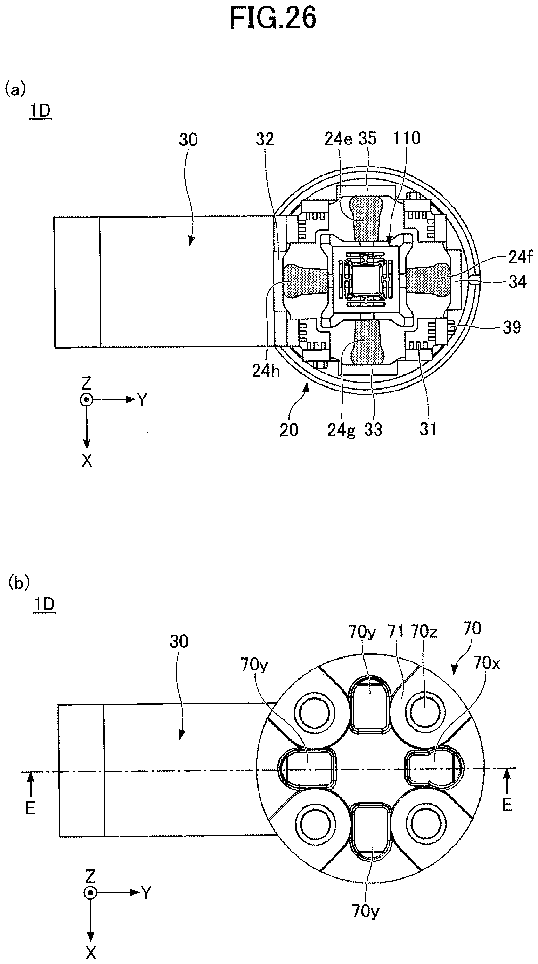

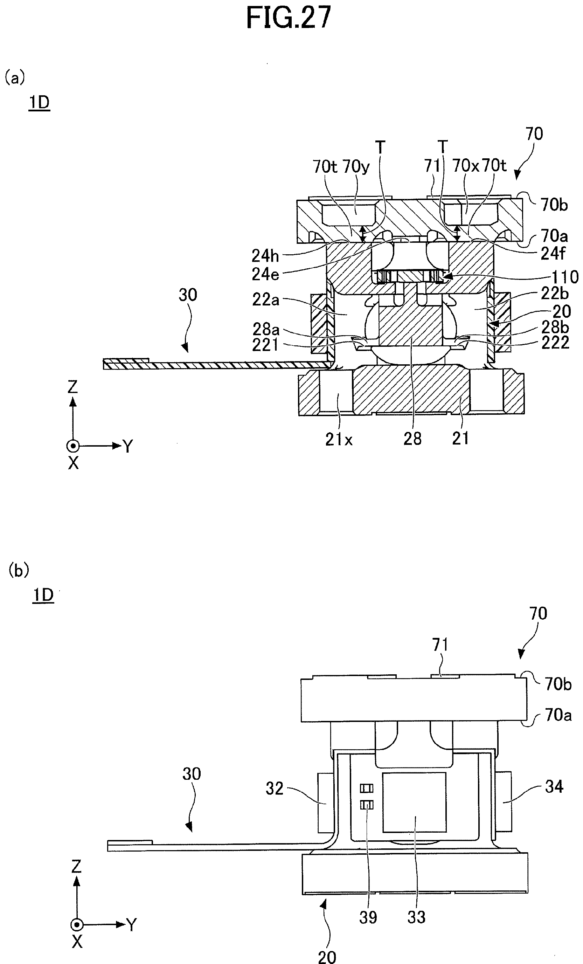

FIG. 26 includes diagrams exemplifying a force sensor device according to the modified example 4 in the first embodiment; FIG. 26(a) is a plan view in a state where a force receiving plate 70 is removed, and FIG. 26(b) is a plan view in a state where the force receiving plate 70 is attached. Also, FIG. 27 includes diagrams exemplifying the force sensor device according to the modified example 4 in the first embodiment; FIG. 27(a) is a vertical cross-sectional view taken along a line E-E in FIG. 26(b), and FIG. 26(b) is a side view.

Referring to FIG. 26 and FIG. 27, the force sensor device 1D has the input parts 24a-24d of the strain generator 20 replaced with input parts 24e-24h, and has the force receiving plate 40 replaced with the force receiving plate 70, which are different from the force sensor device 1 (see FIG. 12, etc.) and the force sensor device 1B (see FIG. 23, etc.).

In the force sensor device 1B, the input parts 24a-24d serving as the junction surfaces with the force receiving plate 40 are approximately rectangular. In contrast, in the force sensor device 1D, the input parts 24e-24h serving as the junction surfaces with the force receiving plate 70 have a shape in which the width is expanded when closer to the circumference of the strain generator 20, and two corner portions on the side of the circumference are formed to have a greater round shape (parts illustrated by a pattern having dots in FIG. 26(a)).

On the upper surface 70b of the force receiving plate 70, one recess 70x and three recesses 70y are provided. All of the recesses 70x and 70y are long holes having arc-shapes on the side of the circumference of the force receiving plate 70, the recess 70x has a wider width on the side of the circumference than the recesses 70y. The recess 70x and one of the recesses 70y facing the recess 70x can be used, for example, for positioning.

The recesses 70x and 70y are placed to cover the input parts 24e-24h of the strain generator 20, respectively. The bottom surfaces of the recesses 70x and 70y project toward the strain generator 20 to form projection parts 70t having round side surfaces, and to contact the upper surfaces of the input parts 24e-24h of the strain generator, respectively.

This enables to enlarge the curvature radius of the round parts, without thickening the force receiving plate 70 unnecessarily (without scaling up the force sensor device 1D in the Z direction). Consequently, in the force receiving plate 70, the stress generated in the projection parts 70t can be reduced, and the withstand load can be improved.

Also, the thickness of the projection parts 70t ("T" in FIG. 27 (a)) being thin enables to lower a laser output when laser welding is performed between the force receiving plate 70 and the input parts 24e-24h. Consequently, the remaining heat stress acting on the force receiving plate 70 can be reduced, and a strain of the force receiving plate 70 can be prevented.

Also, the lower surface 70a of the force receiving plate 70 is positioned on the same plane as the upper surfaces of the input parts 24e-24h of the strain generator 20. This enables to prevent the force receiving plate 70 from deforming when sintering or the like is performed.

The force receiving plate 70 has four through holes 70z having a circular plane shape. The through holes 70z are screw holes to attach the force sensor device 1D to a holding part by using screws or the like. Around each of the through holes 70z, a thick part 71 is provided, which projects on the upper surface 70b of the force receiving plate 70 to form a plane around the through hole 70z. The thick parts 71 can be used for, for example, leveling.

As the material of the force receiving plate 70, for example, SUS (stainless steel) 630 may be used. The force receiving plate 70 may be fixed to the strain generator 20, for example, by welding. Junction of the strain generator 20 and the force receiving plate 70 is not limited to welding; it may be performed by swaging, adhesion, screw clamping, press fitting, brazing/soldering, or the like.

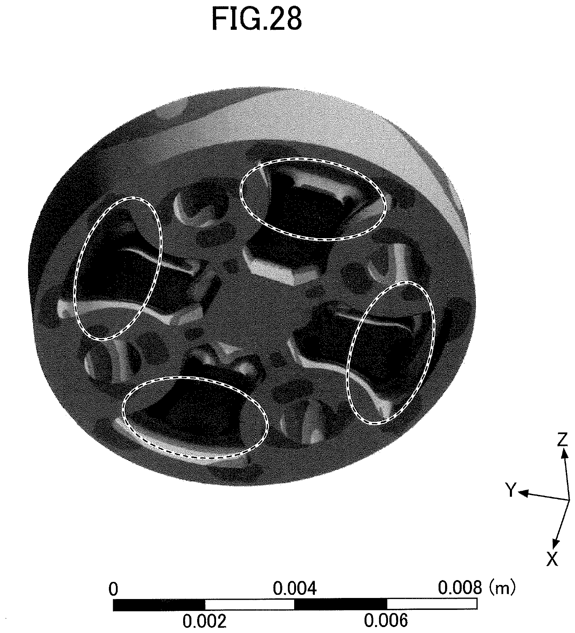

FIG. 28 is a diagram illustrating a stress generated when a force is applied to the force receiving plate 70. As illustrated in FIG. 28, when a force is applied to the force receiving plate 70, a stress is generated at the junction parts of the force receiving plate 70 and the strain generator 20 (projection parts 70t of the force receiving plate 70 and the input parts 24e-24h of the strain generator 20). In particular, stress concentration is high on the projection parts 70t of the force receiving plate 70 and on the circumference side of the input parts 24e-24h of the strain generator 20 (parts designated with dashed-line ovals).

In the force sensor device 1D, the projection parts 70t of the force receiving plate 70 and the input parts 24e-24h of the strain generator 20, at which a stress concentrates, have the wider width (are considerably expanded) on the circumference side; thus, it is possible to improve the strength of the junction parts of the force receiving plate 70 and the strain generator 20, at which a stress concentrates.

### <Modified example 5 in first embodiment>

In a modified example 5 in the first embodiment, an example of a force sensor device will be described, in which the strain generator is connected to the GND of the board. Note that in the modified example 5 in the first embodiment, description may be omitted for the same elements as in the embodiments that have been already described.

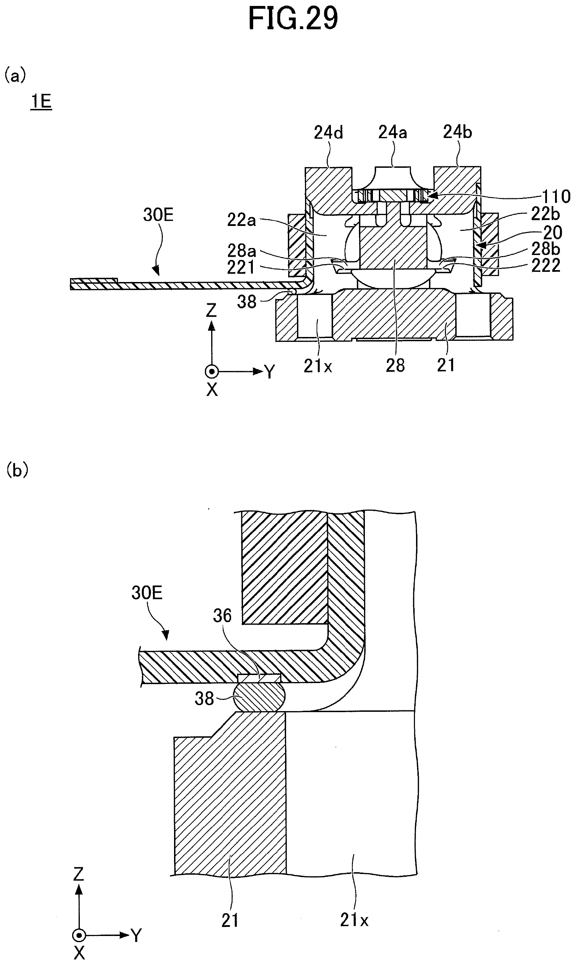

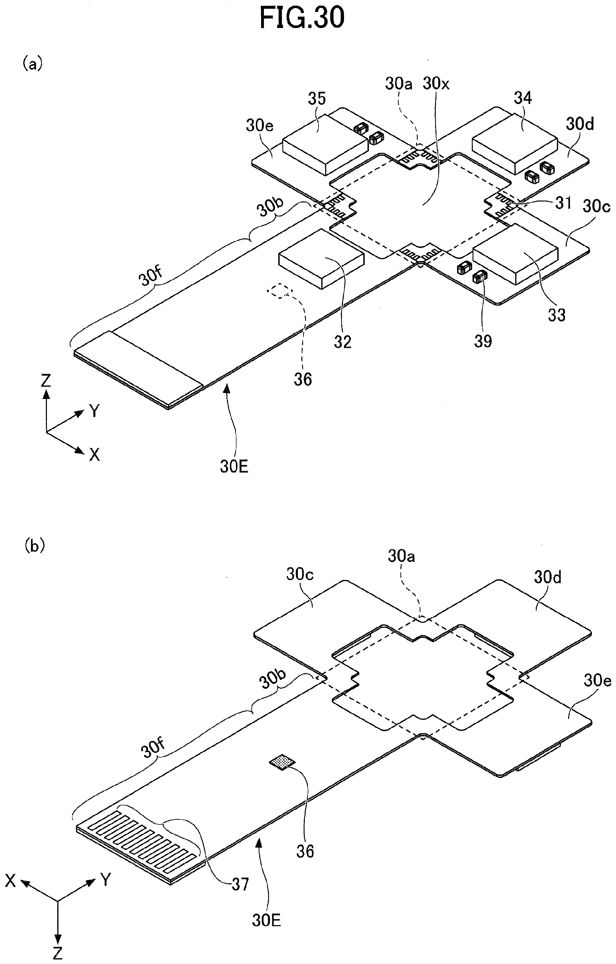

FIG. 29 includes diagrams exemplifying the force sensor device according to the modified example 5 in the first embodiment; FIG. 29(a) is a cross-sectional view and FIG. 29(b) is a partially expanded cross-sectional view around a junction member 38 in FIG. 29(a). Also, FIG. 30 includes diagrams exemplifying the board of the force sensor device according to the modified example 5 in the first embodiment; FIG. 30(a) is a perspective view viewed from one surface side (active component mounting surface side), and FIG. 30(b) is a perspective view viewed from the other surface side (opposite side of the active component mounting surface side).

As illustrated in FIG. 29, the force sensor device 1E has the board 30 replaced with a board 30E, which is different from the force sensor device 1 (see FIG. 1, etc.).

As illustrated in FIG. 30, a conductor pattern 36 is provided on the other surface side of the board 30E. The conductor pattern 36 is connected with a part of input/output terminals 37 through a wiring pattern formed on the board 30E, to be connectable to the GND of an external circuit through the input/output terminals 37.

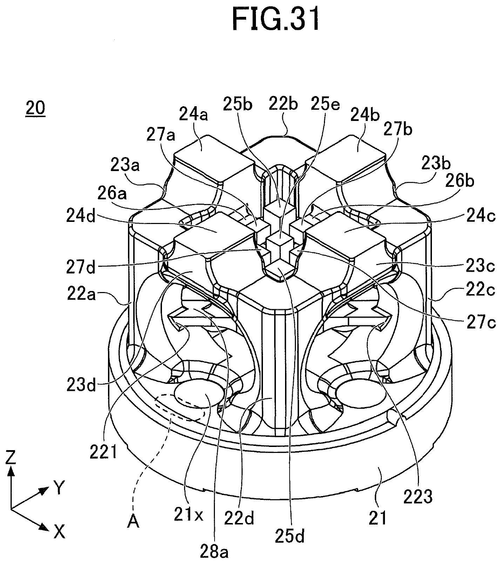

The conductor pattern 36 illustrated in FIG. 29 is electrically connected with a part A (illustrated in FIG. 31) of the strain generators 20 made of metal through a conductive junction member 38 (illustrated in FIG. 29) such as solder or silver paste. This enables the strain generator 20 to have the same electric potential as that of the GND of the external circuit through the conductor pattern 36 and the input/output terminals 37, and thereby, enables to improve the noise tolerance of the force sensor device 1E.

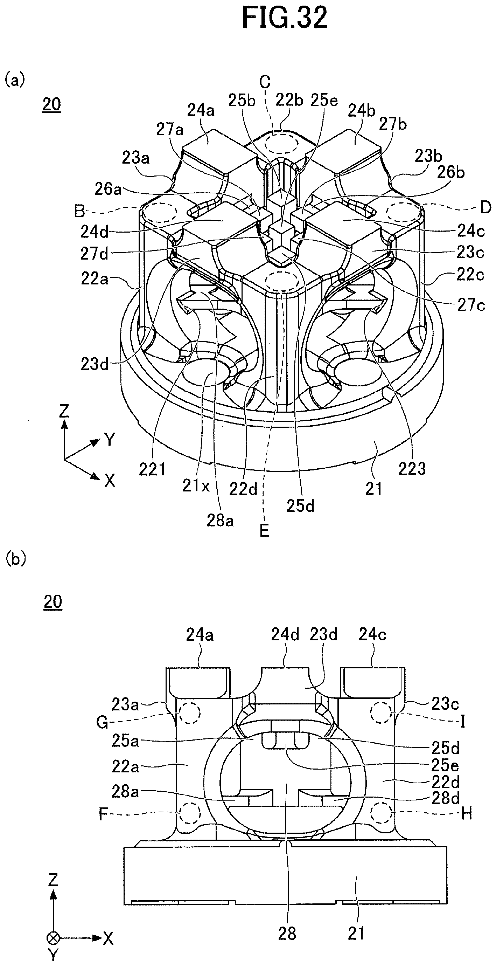

Note that in the strain generator 20, the part to be connected with the conductor pattern 36 does not necessarily to be the part A. In the strain generator 20, parts to be connected with the conductor pattern 36 may be, for example, the upper surfaces of the pillars 22a-22d as designated with B to E in FIG. 32(a), or may be the side surfaces of the pillar 22a and the pillar 22d as designated with F to I in FIG. 32(b). In these cases, a conductor pattern 36 may be provided on the other surface side of the board 30E at a position contacting one of B to I of the strain generator 20. Note that multiple conductor patterns 36 may be provided on the board 30E, to be connected with two or more of A to I of the strain generator 20.

### <Modified example 6 in first embodiment>

In a modified example 6 in the first embodiment, an example will be described in which a recess is provided at a part at which wirebonding of a strain generator is to be performed. Note that in the modified example 6 in the first embodiment, description may be omitted for the same elements as in the embodiments that have been already described.

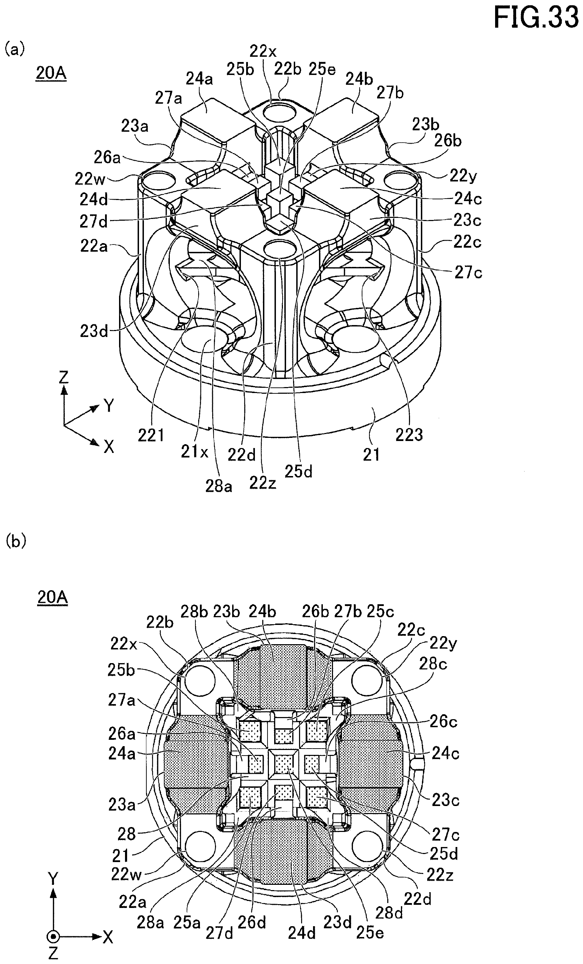

FIG. 33 includes diagrams exemplifying a strain generator 20A according to the modified example 6 in the first embodiment; FIG. 33(a) is a perspective view and FIG. 33(b) is a plan view.

The strain generator 20A may be formed, for example, by metal ejection molding. In the case of forming the strain generator 20A by metal ejection molding, an ejector pin is used when extracting the strain generator 20A from a metallic mold. In metal ejection molding, in general, a nick of an ejector pin remains on a molded product (a strain generator 20A). The strain generator 20A has parts corresponding to ejector pins of the metallic mold placed on the upper surfaces of the pillars 22a-22d, which are free of stress concentration and deformation, and remain unchanged in the positional relationship of the four locations, when a load is applied to the force sensor device.

Therefore, as illustrated in FIG. 33, the strain generator 20A has recesses 22w, 22x, 22y, and 22z, on which nicks of the ejector pins may remain, provided on the upper surfaces (end surfaces) of the pillars 22a 22b, 22c, and 22d, respectively. The plane shape of the recesses 22w, 22x, 22y, and 22z may be, for example, circular.

Meanwhile, the electrodes 31 illustrated in FIG. 18(a) and the like are formed in four corner areas that overlap, in a plan view, the upper surfaces of the pillars 22a-22d of the end surface holding part 30a of the board 30, and can be electrically connected with the corresponding electrodes 15 of the sensor chip 110 by bonding wires. Thanks to the pillars existing directly below, it is easy to apply pressure by ultrasound to the upper surfaces of the pillars 22a-22d, which enables stable wirebonding. Also, when a force is applied to the input parts 24a-24d, the upper surfaces of the pillars 22a-22d are free of stress concentration and deformation, and remain unchanged in the positional relationship of the four locations. Therefore, when a flexible printed circuit board is placed, exfoliation of the flexible printed circuit board can be prevented, and influence of the flexible printed circuit board on deformation of the strain generator when a load is applied can be reduced. In the strain generator 20A, the recesses 22w, 22x, 22y, and 22z exist on the lower surfaces of the electrodes 31 on which wirebonding is to be performed, and the end surface holding part 30a is fixed on the recesses.

Also, as illustrated in FIG. 16(b) and the like, the adhesive 42 is applied to the upper surfaces of the pillars 22a-22d. To improve the yield of a wirebonding process, it is necessary to affix the board 30 on the strain generator 20A with a stable quality, and in this regard, for example, it is necessary for the adhesive 42 not to creep up to the electrodes 31 side of the board 30.

Providing the recesses 22w, 22x, 22y, and 22z and designing the recesses to have an appropriate depth enable the inside of each recess to be an application area of the adhesive 42. This enables to control the application amount of the adhesive 42 and to prevent an excessive spread of wetting after an application. Consequently, the board 30 can be affixed on the strain generator 20A with a stable quality, and a yield improvement of a wirebonding process can be realized.

Also, from the viewpoint of downsizing of the force sensor device and design margin to a post process, in order to prevent a bonding wire from contacting to the cover 50 (see FIG. 18, FIG. 19, etc.), it is desirable to make the height of the electrodes 31 for wirebonding as low as possible. Providing the recesses 22w, 22x, 22y, and 22z and designing the recesses to have an appropriate depth enable to lower the position of the board 30, and thereby, enables to reduce a likelihood that a bonding wire contacts the cover 50.

Note that although it is possible to design a part corresponding to the nick of an ejector pin to have a projecting shape, it is not desirable for the part to have a projecting shape for the reason described above; it is desirable for the part to have a recessed shape. Also, although a design may target on realizing a state of "zero nicks" of an ejector pin (a flat surface having no recess and projection), it is not desirable to target on realizing a state of "zero nick" of an ejector pin because there may be cases where a variation of samples tends to produce either a recess or a projection, or casting fins are generated.

As above, preferred embodiments have been described. Note that the present invention is not limited to the above embodiments, and various changes and replacements can be made in the above embodiments and the modified example without deviating from the scope of the present invention described in the claims.

For example, in the first embodiment, an example has been described in which a total of four ICs as active components including three control ICs and one calculation IC to collect outputs of the control ICs and to perform calculation, are mounted on the board 30. Also, in the modified example 1 in the first embodiment, an example has been described in which three control ICs as active components are mounted on the board 30 (without mounting a calculation IC). However, the active components are not limited to be mounted as such; semiconductor elements having any functions (e.g., an amplifier, a regulator, etc.) can be mounted as the active components.

## Claims

1. A force sensor device (1, 1A to 1E), comprising:
a sensor chip (110) configured to detect displacement in a predetermined axis direction;
a strain generator (20, 20A) configured to transfer an applied force to the sensor chip (110); and
an active component (32 to 35) electrically connected with the sensor chip (110),
a board (30, 30E) including an end surface holding part (30a) and a plurality of side surface holding parts (30b to 30e) bent with respect to the end surface holding part (30a), the active component (32 to 35) being mounted on at least one of the side surface holding parts (30b to 30e),
wherein the strain generator (20, 20A) includes a base (21),
a sensor chip mounting part (28) to mount the sensor chip (110), and
a plurality of pillars (22a to 22d) placed on an upper surface of the base (21) and separately placed around the sensor chip (110),
wherein the end surface holding part (30a) of the board (30, 30E) is fixed to upper surfaces of the pillars (22a to 22d) by an adhesive (42), and
the force sensor device (1, 1A to 1E) being **characterized in that** a surface of each side surface holding part (30b to 30e) of the board (30, 30E) is fixed by an adhesive (43) to two outward side surfaces of the pillars (22a to 22d) that are adjacent to each other.

2. The force sensor device (1, 1A to 1E) as claimed in claim 1, wherein the number of the pillars (22a to 22d) is four,
wherein the board (30, 30E) includes
the end surface holding part (30a) fixed to end surfaces of the four pillars (22a to 22d), and
four side surface holding parts (30b to 30e) that extend in four directions from the end surface holding part (30a), and are bent with respect to the end surface holding part (30a) to be fixed to the side surfaces of the pillars (22a to 22d), and
wherein the active component (32 to 35) is mounted on at least one of the four side surface holding parts (30b to 30e).

3. The force sensor device (1, 1A to 1E) as claimed in claim 2, wherein the board (30, 30E) includes an extending part (30f) that extends from one of the four side surface holding parts (30b), and
wherein an input/output terminal is arranged at an end of the extending part (30f).

4. The force sensor device (1, 1A to 1E) as claimed in claim 3, wherein the force sensor device (1, 1A to 1E) includes three active components (33 to 35),
wherein the three active components (33 to 35) are mounted on three of the four side surface holding parts (30c to 30e) except for the one of the four side surface holding parts (30b) provided with the extending part (30f).

5. The force sensor device (1, 1A to 1E) as claimed in claim 4, wherein each of the three active components (33 to 35) has a function to convert an analog electric signal output by the sensor chip (110) into a digital electric signal.

6. The force sensor device (1, 1A to 1E) as claimed in claim 4 or 5, wherein the force sensor device (1, 1A to 1E) includes another active component (32) electrically connected with the three active components (33 to 35), and
wherein said another active component (32) is mounted on the one of the four side surface holding parts (30b) provided with the extending part (30f) .

7. The force sensor device (1, 1A to 1E) as claimed in claim 6, wherein said another active component (32) has a function to perform a predetermined calculation on the digital electric signal output by each of the three active components (33 to 35), and to perform a conversion into a unit of force or moment.

8. The force sensor device (1, 1A to 1E) as claimed in any one of claims 2 to 7, wherein the end surface holding part (30a) has an opening (30x) to expose the sensor chip (110),
wherein an electrode (31) electrically connected with the active component (32 to 35) is formed in an area of the end surface holding part (30a) that overlaps, in a plan view, an end surface of a corresponding one of the pillars (22a to 22d), and
wherein each of the electrodes (31) is electrically connected with an electrode (15) of the sensor chip (110) through a metal wire.

9. The force sensor device (1, 1A to 1E) as claimed in claim 8, wherein a recess (22w to 22z) is provided on an end surface of each of the four pillars (22a to 22d), and
wherein each of the electrodes (31) of the respective end surface holding part (30a) is fixed on the recess (22a to 22d).

10. The force sensor device (1, 1A to 1E) as claimed in any one of claims 1 to 9, wherein the strain generator (20, 20A) includes
beams (23a to 23d) connecting adjacent pillars (22a to 22d) with each other on the opposite side of the base (21),
wherein a central part in a longitudinal direction of each of the beams (23a to 23d) is thicker than both ends,
wherein the central part in the longitudinal direction has a projecting part projecting outward with respect to a side surface of the pillar (22a to 22d), and
wherein the active component (32 to 35) is placed so as to overlap, in a plan view, at least a part of the projecting part on a side closer to the base (21) than to the beams (23a to 23d).

11. The force sensor device (1E) as claimed in any one of claims 1 to 10, wherein the strain generator (20) is formed of a metal,
wherein a conductor pattern (36) is provided on a side of the board (30E) opposite of the side on which the active component (32) is mounted, and
wherein the conductor pattern (36) is electrically connected with the strain generator (20) through a conductive junction member (38).

12. The force sensor device (1E) as claimed in claim 11, wherein the conductor pattern (36) is configured to be connectable with a ground of an external circuit.

13. The force sensor device (1, 1A to 1E) according to any one of claims 1 to 12, wherein the active component (32 to 35) comprises an integrated circuit.

## Patentansprüche

1. Kraftsensorvorrichtung (1, 1A bis 1E), die Folgendes umfasst:
einen Sensorchip (110), der dazu ausgelegt ist, einen Versatz in einer vorbestimmten Achsenrichtung zu detektieren;
einen Beanspruchungserzeuger (20, 20A), der dazu ausgelegt ist, eine ausgeübte Kraft auf den Sensorchip (110) zu übertragen; und
eine aktive Komponente (32 bis 35), die elektrisch mit dem Sensorchip (110) verbunden ist,
eine Platine (30, 30E), die ein Endflächenhalteteil (30a) und eine Vielzahl von Seitenflächenhalteteilen (30b bis 30e), die mit Bezug auf das Endflächenhalteteil (30a) gebogen sind, beinhaltet, wobei die aktive Komponente (32 bis 35) auf mindestens einem der Seitenflächenhalteteile (30b bis 30e) montiert ist,
wobei der Beanspruchungserzeuger (20, 20A) eine Basis (21) beinhaltet,
ein Sensorchipmontageteil (28) zum Montieren des Sensorchips (110), und
eine Vielzahl von Pfosten (22a bis 22d), die auf einer oberen Fläche der Basis (21) platziert und separat um den Sensorchip (110) platziert sind,
wobei das Endflächenhalteteil (30a) der Platine (30, 30E) mittels eines Klebers (42) an oberen Flächen der Pfosten (22a bis 22d) befestigt ist, und
wobei die Kraftsensorvorrichtung (1, 1A bis 1E) **dadurch gekennzeichnet ist, dass** eine Fläche jedes Seitenflächenhalteteils (30b bis 30e) der Platine (30, 30E) mittels eines Klebers (43) an zwei Außenseitenflächen der Pfosten (22a bis 22d), die einander benachbart sind, befestigt ist.

2. Kraftsensorvorrichtung (1, 1A bis 1E) nach Anspruch 1, wobei die Anzahl der Pfosten (22a bis 22d) vier ist,
wobei die Platine (30, 30E) Folgendes beinhaltet das Endflächenhalteteil (30a), das an Endflächen der vier Pfosten (22a bis 22d) befestigt ist, und
vier Seitenflächenhalteteile (30b bis 30e), die sich vom Endflächenhalteteil (30a) in vier Richtungen erstrecken, und mit Bezug auf das Endflächenhalteteil (30a) zum Befestigen an den Seitenflächen der Pfosten (22a bis 22d) gebogen sind, und
wobei die aktive Komponente (32 bis 35) auf mindestens einem der vier Seitenflächenhalteteile (30b bis 30e) montiert ist.

3. Kraftsensorvorrichtung (1, 1A bis 1E) nach Anspruch 2, wobei die Platine (30, 30E) ein Verlängerungsteil (30f) beinhaltet, das sich von einem der vier Seitenflächenhalteteile (30b) erstreckt, und
wobei ein Eingangs-/Ausgangsanschluss an einem Ende des Verlängerungsteils (30f) angeordnet ist.

4. Kraftsensorvorrichtung (1, 1A bis 1E) nach Anspruch 3, wobei die Kraftsensorvorrichtung (1, 1A bis 1E) drei aktive Komponenten (33 bis 35) beinhaltet,
wobei die drei aktiven Komponenten (33 bis 35) auf drei der vier Seitenflächenhalteteile (30c bis 30e) montiert sind, außer dem einen der vier Seitenflächenhalteteile (30b), auf dem das Verlängerungsteil (30f) bereitgestellt ist.

5. Kraftsensorvorrichtung (1, 1A bis 1E) nach Anspruch 4, wobei jede der drei aktiven Komponenten (33 bis 35) eine Funktion zum Umwandeln eines analogen elektrischen Signals, das vom Sensorchip (110) ausgegeben wird, in ein digitales elektrisches Signal aufweist.

6. Kraftsensorvorrichtung (1, 1A bis 1E) nach Anspruch 4 oder 5, wobei die Kraftsensorvorrichtung (1, 1A bis 1E) eine weitere aktive Komponente (32) beinhaltet, die elektrisch mit den drei aktiven Komponenten (33 bis 35) verbunden ist, und
wobei die weitere aktive Komponente (32) auf dem einen der vier Seitenflächenhalteteile (30b), auf dem das Verlängerungsteil (30f) bereitgestellt ist, montiert ist.

7. Kraftsensorvorrichtung (1, 1A bis 1E) nach Anspruch 6, wobei die weitere aktive Komponente (32) eine Funktion zum Durchführen einer vorbestimmten Berechnung am digitalen elektrischen Signal, das von den drei aktiven Komponenten (33 bis 35) ausgegeben wird, und zum Durchführen einer Umwandlung in eine Kraft- oder eine Momenteinheit aufweist.

8. Kraftsensorvorrichtung (1, 1A bis 1E) nach einem der Ansprüche 2 bis 7, wobei das Endflächenhalteteil (30a) eine Öffnung (30x) zum Freilegen des Sensorchips (110) aufweist,
wobei in einem Bereich des Endflächenhalteteils (30a), der in einer Draufsicht eine Endfläche eines entsprechenden der Pfosten (22a bis 22d) überlappt, eine Elektrode (31) gebildet ist, die elektrisch mit der aktiven Komponente (32 bis 35) verbunden ist, und
wobei jede der Elektroden (31) über einen Metalldraht elektrisch mit einer Elektrode (15) des Sensorchips (110) verbunden ist.

9. Kraftsensorvorrichtung (1, 1A bis 1E) nach Anspruch 8, wobei auf jeder Endfläche von jedem der vier Pfosten (22a bis 22d) eine Ausnehmung (22w bis 22z) bereitgestellt ist, und
wobei jede der Elektroden (31) des jeweiligen Endflächenhalteteils (30a) an der Ausnehmung (22w bis 22z) befestigt ist.

10. Kraftsensorvorrichtung (1, 1A bis 1E) nach einem der Ansprüche 1 bis 9, wobei der Beanspruchungserzeuger (20, 20A) Folgendes beinhaltet
Träger (23a bis 23d), die benachbarte Pfosten (22a bis 22d) auf der entgegengesetzten Seite der Basis (21) miteinander verbinden,
wobei ein zentraler Teil in einer Längsrichtung von jedem der Träger (23a bis 23d) dicker als beide Enden ist,
wobei der zentrale Teil in der Längsrichtung einen vorstehenden Teil aufweist, der mit Bezug auf eine Seitenfläche der Pfosten (22a bis 22d) nach außen vorsteht, und
wobei die aktive Komponente (32 bis 35) derart platziert ist, dass sie auf einer Seite, die der Basis (21) näher ist als den Trägern (23a bis 23d), in einer Draufsicht mindestens einen Teil des vorstehenden Teils überlappt.

11. Kraftsensorvorrichtung (1E) nach einem der Ansprüche 1 bis 10, wobei der Beanspruchungserzeuger (20) aus einem Metall gebildet ist,
wobei eine Leiterstruktur (36) auf einer Seite der Platine (30E) gegenüber der Seite, auf der die aktive Komponente (32) montiert ist, bereitgestellt ist, und
wobei die Leiterstruktur (36) über ein leitendes Verzweigungselement (38) elektrisch mit dem Beanspruchungserzeuger (20) verbunden ist.

12. Kraftsensorvorrichtung (1E) nach Anspruch 11, wobei die Leiterstruktur (36) dazu ausgelegt ist, mit einer Masse einer externen Schaltung verbindbar zu sein.

13. Kraftsensorvorrichtung (1, 1A bis 1E) nach einem der Ansprüche 1 bis 12, wobei die aktive Komponente (32 bis 35) eine integrierte Schaltung umfasst.

## Revendications

1. Dispositif de capteur de force (1, 1A à 1E), comprenant :
une puce de capteur (110) configurée pour détecter le déplacement dans une direction d'axe prédéterminée ;
un générateur de contrainte (20, 20A) configuré pour transférer une force appliquée sur la puce de capteur (110) ; et
un composant actif (32 à 35) électriquement raccordé à la puce de capteur (110),
une plaque (30, 30E) comprenant une partie de support de surface d'extrémité (30a) et une pluralité de parties de support de surface latérale (30b à 30e) pliées par rapport à la partie de support de surface d'extrémité (30a), le composant actif (32 à 35) étant monté sur au moins l'une des parties de support de surface latérale (30b à 30e),
dans lequel le générateur de contrainte (20, 20A) comprend une base (21),
une partie de montage de puce de capteur (28) pour monter la puce de capteur (110), et
une pluralité de piliers (22a à 22d) placés sur une surface supérieure de la base (21) et séparément placés autour de la puce de capteur (110),
dans lequel la partie de support de surface d'extrémité (30a) de la plaque (30, 30E) est fixée sur les surfaces supérieures des piliers (22a à 22d) par un adhésif (42), et
le dispositif de capteur de force (1, 1A à 1E) étant **caractérisé en ce qu'**une surface de chaque partie de support de surface latérale (30b à 30e) de la plaque (30, 30E) est fixée par un adhésif (43) sur deux surfaces latérales extérieures des piliers (22a à 22d) qui sont adjacents entre eux.

2. Dispositif de capteur de force (1, 1A à 1E) selon la revendication 1, dans lequel le nombre de piliers (22a à 22d) est de quatre,
dans lequel la plaque (30, 30E) comprend :
la partie de support de surface d'extrémité (30a) fixée sur les surfaces d'extrémité des quatre piliers (22a à 22d), et
quatre parties de support de surface latérale (30b à 30e) qui s'étendent dans quatre directions à partir de la partie de support de surface d'extrémité (30a) et sont pliées par rapport à la partie de support de surface d'extrémité (30a) pour être fixées sur les surfaces latérales des piliers (22a à 22d), et
dans lequel le composant actif (32 à 35) est monté sur au moins l'une des quatre parties de support de surface latérale (30b à 30e).

3. Dispositif de capteur de force (1, 1A à 1E) selon la revendication 2, dans lequel la plaque (30, 30E) comprend une partie d'extension (30f) qui s'étend à partir de l'une des quatre parties de support de surface latérale (30b), et
dans lequel une borne d'entrée / sortie est agencée au niveau d'une extrémité de la partie d'extension (30f).

4. Dispositif de capteur de force (1, 1A à 1E) selon la revendication 3, dans lequel le dispositif de capteur de force (1, 1A à 1E) comprend trois composants actifs (33 à 35),
dans lequel les trois composants actifs (33 à 35) sont montés sur trois des quatre parties de support de surface latérale (30c à 30e) excepté pour la partie des quatre parties de support de surface latérale (30b) dotée de la partie d'extension (30f).

5. Dispositif de capteur de force (1, 1A à 1E) selon la revendication 4, dans lequel chacun des trois composants actifs (33 à 35) a une fonction pour convertir un signal électrique analogique produit par la puce de capteur (110) en un signal électrique numérique.

6. Dispositif de capteur de force (1, 1A à 1E) selon la revendication 4 ou 5, dans lequel le dispositif de capteur de force (1, 1A à 1E) comprend un autre composant actif (32) électriquement raccordé avec les trois composants actifs (33 à 35), et
dans lequel ledit autre composant actif (32) est monté sur l'une des quatre parties de support de surface latérale (30b) dotée de la partie d'extension (30f).

7. Dispositif de capteur de force (1, 1A à 1E) selon la revendication 6, dans lequel ledit autre composant actif (32) a une fonction pour réaliser un calcul prédéterminé sur le signal électrique numérique produit par chacun des trois composants actifs (33 à 35) et pour réaliser une conversion en une unité de force ou de moment.

8. Dispositif de capteur de force (1, 1A à 1E) selon l'une quelconque des revendications 2 à 7, dans lequel la partie de support de surface d'extrémité (30a) a une ouverture (30x) pour exposer la puce de capteur (110),
dans lequel une électrode (31) électriquement raccordée au composant actif (32 à 35) est formée dans une zone de la partie de support de surface d'extrémité (30a) qui chevauche, sur une vue en plan, une surface d'extrémité d'un pilier correspondant des piliers (22a à 22d), et
dans lequel chacune des électrodes (31) est électriquement raccordée avec une électrode (15) de la puce de capteur (110) par le biais d'un fil métallique.

9. Dispositif de capteur de force (1, 1A à 1E) selon la revendication 8, dans lequel un évidement (22w à 22z) est prévu sur une surface d'extrémité de chacun des quatre piliers (22a à 22d), et
dans lequel chacune des électrodes (31) de la partie de support de surface d'extrémité (30a) respective est fixée sur l'évidement (22w à 22z).

10. Dispositif de capteur de force (1, 1A à 1E) selon l'une quelconque des revendications 1 à 9, dans lequel le générateur de contrainte (20, 20A) comprend :
des poutres (23a à 23d) raccordant des piliers (22a à 22d) adjacents entre eux sur le côté opposé de la base (21),
dans lequel une partie centrale dans une direction longitudinale de chacune des poutres (23a à 23d) est plus épaisse que les deux extrémités,
dans lequel la partie centrale dans la direction longitudinale a une partie en saillie faisant saillie vers l'extérieur par rapport à une surface latérale du pilier (22a à 22d), et
dans lequel le composant actif (32 à 35) est placé pour chevaucher, sur une vue en plan, au moins une partie de la partie en saillie sur un côté plus à proximité de la base (21) que des poutres (23a à 23d).

11. Dispositif de capteur de force (1E) selon l'une quelconque des revendications 1 à 10, dans lequel le générateur de contrainte (20) est formé à partir d'un métal,
dans lequel un motif de conducteur (36) est prévu sur un côté de la plaque (30E) opposé au côté sur lequel le composant actif (32) est monté, et
dans lequel le motif de conducteur (36) est électriquement raccordé avec le générateur de contrainte (20) par le biais d'un élément de jonction conducteur (38) .

12. Dispositif de capteur de force (1E) selon la revendication 11, dans lequel le motif de conducteur (36) est configuré pour pouvoir être raccordé avec une masse d'un circuit externe.

13. Dispositif de capteur de force (1, 1A à 1E) selon l'une quelconque des revendications 1 à 12, dans lequel le composant actif (32 à 35) comprend un circuit intégré.
